# EUROPEAN PATENT APPLICATION

(11) **EP 4 546 469 A2**
(43) Date of publication of application: **30.04.2025**
(21) Application number: 24205720.6
(22) Date of filing: 10.10.2024
(51) Int. Cl.: H01M 4/62, H01M 10/0562

(54) **CATHODE AND LITHIUM SECONDARY BATTERY INCLUDING THE SAME**

(30) Priority: 24.10.2023 KR 20230143258
(71) Applicant: SAMSUNG SDI CO., LTD., Yongin-si, Gyeonggi-do 17084 (KR)
(72) Inventor: Son, Inhyuk, 17084 Gyeonggi-do (KR); Jo, Sungnim, 17084 Gyeonggi-do (KR); Shim, Kyueun, 17084 Gyeonggi-do (KR); Lim, Hyungsub, 17084 Gyeonggi-do (KR); Park, Taehyun, 17084 Gyeonggi-do (KR); Lee, Jieun, 17084 Gyeonggi-do (KR)
(74) Representative: Michalski Hüttermann & Partner Patentanwälte mbB

(57) **Abstract**

A lithium secondary battery including a cathode. The cathode includes a cathode current collector and a cathode active material layer on one or both sides of the cathode current collector and including a cathode active material, a gamma sulfur-fibrous carbon-based material composite, and a sulfide-based solid electrolyte, wherein the cathode active material includes Li₂S, a Li₂S composite, or a combination thereof, and the gamma sulfur-fibrous carbon-based material composite has a structure in which monoclinic gamma phase sulfur (S) is on a fibrous carbon-based material.

## Description

### CROSS-REFERENCE TO RELATED APPLICATION

This application claims priority to and the benefit of Korean Patent Application No. 10-2023-0143258, filed on October 24, 2023, in the Korean Intellectual Property Office, the entire content of which is incorporated herein by reference.

### BACKGROUND

### 1. Field

Embodiments of the present disclosure described herein are related to a cathode and a lithium secondary battery including the same.

### 2. Description of the Related Art

Recently, in response to industrial demands, the development of batteries having relatively high energy density and safety has been actively conducted. For example, lithium batteries are utilized for one or more suitable purposes in information devices, communication devices, vehicles (e.g., electrical vehicles), etc. Vehicles may impact human wellbeing, and thus, safety may be emphasized.

Lithium batteries employing a liquid electrolyte may have a relatively higher risk of fire and/or explosion in the event of a short circuit. All solid secondary batteries employing a solid electrolyte instead of a liquid electrolyte have been suggested. Solid electrolytes should have a lower risk of ignition than liquid electrolytes.

By employing a solid electrolyte instead of a liquid electrolyte, the risk of fire or explosion in an all solid secondary battery (or batteries) may be reduced, and improved safety may be provided.

However, no solvent is utilized in preparing a cathode, an electrolyte, and an anode in all solid secondary batteries, resulting in low ionic conductivity and high interfacial resistance. To solve this issue, high pressure is required or may be provided in preparing an all solid secondary batter (or battery cell), and if (e.g., when) a lithium-plated layer is utilized as an anode, additional pressure is required or may be needed for substantially uniform lithium deposition. Therefore, to improve a pressurization process, it is necessary or desired to design a polymer film that facilitates substantially uniform lithium deposition between an electrolyte and an anode.

### SUMMARY

Aspects according to one or more embodiments are directed toward a cathode having improved specific capacity through improvement of electronic (e.g., electron) conductivity and/or ionic (e.g., ion) conductivity.

Aspects according to one or more embodiments are directed toward a lithium secondary battery having an improved capacity retention ratio and/or improved charge/discharge characteristics by including the cathode.

Additional aspects will be set forth in part in the description which follows and, in part, will be apparent from the description, or may be learned by practice of the presented embodiments of the present disclosure.

According to one or more embodiments, a cathode includes a cathode current collector and a cathode active material layer arranged on a side (e.g., one or both (e.g., opposite) sides or surfaces) of the cathode current collector and including a cathode active material, a gamma sulfur-fibrous carbon-based material composite, and a sulfide-based solid electrolyte, wherein the cathode active material includes Li₂S, a Li₂S composite, or a combination thereof, and the gamma sulfur-fibrous carbon-based material composite has a structure in which monoclinic gamma phase sulfur (S) is arranged on a fibrous carbon-based material.

According to one or more embodiments, a lithium secondary battery includes a cathode, an anode, and an electrolyte layer arranged between the cathode and the anode, wherein the anode includes an anode current collector and a first anode active material layer arranged on a side surface (e.g., at least one side or surface (e.g., one or both (e.g., opposite) sides)) of the anode current collector, and the cathode includes the above-described cathode.

### BRIEF DESCRIPTION OF THE DRAWINGS

The above and other aspects, features, and advantages of certain embodiments of the present disclosure will be more apparent from the following description taken in conjunction with the accompanying drawings, in which:
FIGS. 1-5 are cross-sectional views of an all solid secondary battery according to embodiments; and
FIG. 6 shows an X-ray diffraction (XRD) spectrum for a gamma sulfur-carbon nanofiber composite.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description. As utilized herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

Unless otherwise defined, all terms (including technical and scientific terms) utilized herein have the same meaning as commonly understood by one of ordinary skill in the art to which this disclosure belongs. It will be further understood that terms, such as those defined in commonly utilized dictionaries, should be interpreted as having a meaning that is consistent with their meaning in the context of the relevant art and will not be interpreted in an idealized or overly formal sense unless expressly so defined herein.

Example embodiments are described herein with reference to schematic cross-sectional views of idealized embodiments. As such, variations from the shapes of the illustrations as a result, for example, of manufacturing techniques and/or tolerances, are to be expected. Thus, example embodiments should not be construed as limited to the particular shapes of regions illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The present disclosure may, however, be embodied in many different forms and should not be construed as limited to the embodiments set forth herein. The embodiments are provided so that this disclosure will be thorough and complete, and will fully convey the scope of the present disclosure to those skilled in the art. Like reference numerals in the drawings denote like elements.

It will be understood that when one element is referred to as being "on" another element, it can be directly on the other element or intervening elements may be present therebetween. In contrast, when one element is referred to as being "directly on" another element, there are no intervening elements therebetween.

Although the terms "first," "second," "third," and/or the like may be utilized herein to describe one or more suitable elements, components, regions, layers, and/or sections, these elements, components, regions, layers, and/or sections, should not be limited by these terms. These terms are only utilized to distinguish one element, component, region, layer, or section from another element, component, region, layer, or section. Thus, a first element, component, region, layer, or section discussed herein could be termed a second element, component, region, layer, or section, without departing from the teachings herein.

The terminology utilized herein is for the purpose of describing particular embodiments only and is not intended to be limiting of the present disclosure. As utilized herein, the singular forms are intended to include the plural forms including "at least one" as well, unless the context clearly indicates otherwise. The expression "at least one" should not be construed as limited to be singular. As utilized herein, the term "and/or" includes any and all combinations of one or more of the associated listed items. The terms "comprises" and/or "comprising," or "includes" and/or "including" utilized herein specify the presence of stated features, regions, integers, steps, operations, elements, and/or components, but do not preclude the presence or addition of one or more other features, regions, integers, steps, operations, elements, components, and/or groups thereof. Further, the utilization of "may" when describing embodiments of the present disclosure refers to "one or more embodiments of the present disclosure".

Spatially relative terms, such as "under," "below," "lower," "on," "above," "upper," and/or the like may be utilized herein for ease of description of the relationship of one element or feature to another element(s) or feature(s) as illustrated in the drawings. It will be understood that the spatially relative terms are intended to encompass different orientations of a device in utilize or operation, in addition to the orientation depicted in the drawings. For example, if (e.g., when) the device in the drawings is turned over, elements described as "under" or "below" other elements or features would then be oriented "above" the other elements or features. Thus, the example term "below" may encompass both (e.g., simultaneously) an orientation of above and below. The device may be otherwise oriented (rotated 90 degrees or at other orientations) and the spatially relative descriptors utilized herein may be interpreted accordingly.

The term "Group" refers to a group of the periodic table of elements according to the International Union of Pure and Applied Chemistry ("IUPAC") Groups 1-18 group classification system.

Unless otherwise defined, in the present disclosure, the term particle size, "particle diameter" or "crystallite size" refers to an average diameter if (e.g., when) particles or crystallites are spherical and refers to an average major axis length if (e.g., when) particles or crystallites are non-spherical. A particle size, particle diameter or crystallite size may be measured by utilizing a particle size analyzer (PSA) or from a transmission electron microscope (TEM) image or a scanning electron microscope (SEM) image. A "particle diameter" or "crystallite size" is, for example, an average particle diameter or average crystallite size. An "average particle diameter" or "average crystallite size" refers to, for example, a median particle diameter or crystallite size (D50), which refers to the diameter of particles or crystallites having a cumulative volume of 50 vol% in particle size or crystallite size distribution. As another method, a dynamic light-scattering measurement device may be utilized to perform measurement and data analysis, the number of particles or crystallites may be counted for each particle size or crystallite size range, and then the average particle diameter or average crystallite diameter (D50) may be obtained through calculation therefrom. In some embodiments, the average particle diameter or average crystallite diameter (D50) may be measured by utilizing a laser diffraction method. If (e.g., when) measurement is performed by a laser diffraction method, for example, particles or crystallites to be measured may be dispersed in a dispersion medium, and then may be irradiated with ultrasonic waves of about 28 kHz at an output of 60 W by utilizing a commercially available laser diffraction particle or crystallite size measurement device (e.g., Microtrac MT 3000), and then the average or crystallite particle diameter (D50) on the basis of 50% of the particle or crystallite diameter distribution in the measurement device may be calculated.

D50 refers to a particle (e.g., or crystallite) size corresponding to a 50 % cumulative volume if (e.g., when) a particle size distribution measured through a laser diffraction method is calculated from particles having a smaller particle size.

D90 refers to a particle size corresponding to a 90 % cumulative volume if (e.g., when) a particle size distribution measured by laser diffraction is calculated from particles having a smaller particle size. D10 refers to a particle size corresponding to a 10 % cumulative volume if (e.g., when) a particle size distribution measured by laser diffraction is calculated from particles having a smaller particle size.

As utilized herein, the term "metal" refers to both (e.g., simultaneously) metals and metalloids such as silicon and germanium, in an elemental or ionic state, and the term "alloy" refers to a mixture of two or more metals.

As utilized herein, the term "electrode active material" refers to an electrode material capable of undergoing lithiation and delithiation.

As utilized herein, the term "cathode active material" refers to a cathode material capable of undergoing lithiation and delithiation, and the term "anode active material" refers to an anode material capable of undergoing lithiation and delithiation.

As utilized herein, the terms "lithiation" and "lithiate" refer to a process of adding lithium to an electrode active material, and the terms "delithiation" and "delithiate" refer to a process of removing lithium from an electrode active material.

As utilized herein, the terms "charging" and "charge" refer to a process of providing electrochemical energy to a battery, and the terms "discharging" and "discharge" refer to a process of removing electrochemical energy from a battery.

As utilized herein, the terms "positive electrode" and "cathode" refer to an electrode at which electrochemical reduction and lithiation occur during a discharging process, and the terms "negative electrode" and "anode" refer to an electrode at which electrochemical oxidation and delithiation occur during a discharging process.

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The term "length", "thickness", and "width" as utilized herein refers to, for example, an average length, an average thickness, and an average width respectively. The "length", "thickness", and "width" measured utilizing software from a scanning electron microscope image.

In the present disclosure, the aspect ratio represents the ratio (L1/L2) of the major axis length L1 (eg, length) and the minor axis length L2 (eg, diameter). Here, the aspect ratio, major axis length, minor axis length, length, and diameter represent the average aspect ratio, average major axis length, average minor axis length, average length, and average diameter. The aspect ratio can be evaluated using a scanning electron microscope (SEM).

While particular embodiments have been described, alternatives, modifications, variations, improvements, and substantial equivalents that are currently unexpected or unforeseeable may occur to the applicant or those skilled in the art. Therefore, the appended claims as filed and as they may be amended are intended to include all such alternatives, modification, variations, improvements, and substantial equivalents.

Hereinafter, a cathode according to embodiments and a lithium secondary battery including the same will be described in more detail.

Lithium sulfide is an insulator having almost no electrical conductivity, and thus, to utilize lithium sulfide as a cathode active material, issues due to the low electrical conductivity thereof need to be solved through combination with a carbon material having high electrical conductivity. In some embodiments, in an all solid secondary battery, a solid electrolyte layer, a cathode, and an anode mixture layer may contain substantially no solvent, resulting in low electronic conductivity and lithium ion conductivity, and thus, sufficient capacity may not be secured during charging/discharging. Therefore, it is important to design an interface to promote electrochemical reactions between a cathode active material and a solid electrolyte.

To solve issues due to the low electrical conductivity of lithium sulfide, a lithium sulfide-carbon nanocomposite may be formed, or a particle surface may be coated with a conductive material, thereby increasing electrochemical activity. Various other attempts, such as introducing a protective layer on an electrode surface or reducing the size of lithium sulfide particles, have been made.

To solve the above-described issues, the cathode according to embodiments may include a cathode active material and a gamma sulfur-fibrous carbon-based material composite to have improved electronic/ionic conductivity, thereby having improved specific capacity and an improved capacity retention ratio. In this regard, the cathode active material may be Li₂S, a Li₂S composite, or a combination thereof.

The gamma sulfur-fibrous carbon-based material composite may have a structure in which monoclinic gamma phase sulfur (S) is arranged on carbon nanofibers (CNFs), which are a fibrous carbon-based material.

Examples of sulfur may include α sulfur (orthorhombic), β sulfur (monoclinic), γ sulfur (monoclinic), amorphous sulfur, and/or the like. Among these, alpha sulfur may be the most stable at room temperature, beta sulfur may be obtained by heating alpha sulfur to a temperature above about 94.4 °C, and beta sulfur may be quickly converted into alpha sulfur at a temperature of about 94 °C or lower.

As shown in Reaction Formula 1, alpha sulfur may undergo a reaction in which lithium polysulfide is formed as an intermediate sulfur product and is converted into lithium sulfide. However, lithium polysulfide may be easily dissolved in an electrolyte solution, resulting in loss of battery capacity and lifespan, and thus, improvement in this regard is needed.

Reaction Formula 1 **α-S ↔ LPS(Li₂S₆, Li₂S₈) ↔ Li₂S**

Gamma sulfur may have a melting point of about 106.8 °C and be converted into alpha sulfur at room temperature, but the gamma sulfur-fibrous carbon-based material composite, which is obtained by depositing gamma sulfur on carbon nanofibers, may be stable at room temperature. In some embodiments, unlike alpha sulfur, gamma sulfur may be directly converted into Li₂S, and thus, if (e.g., when) a liquid electrolyte including a carbonate-based organic solvent is utilized, a redox reaction may be performed without lithium polysulfide.

The gamma sulfur-fibrous carbon-based material composite may concurrently (e.g., simultaneously) serve as a cathode active material and a conductive agent. By utilizing the cathode including the gamma sulfur-fibrous carbon-based material composite, high rate characteristics may be improved due to improvement of an ion/electron network as a thick-film electrode, formation of Li₂S₆ and Li₂S₈, which are intermediate sulfur products, may be reduced due to reduction in cathode overvoltage, and Li₂S and S₈ may undergo direct conversion, and thus, a lithium secondary battery having an improved capacity retention ratio and improved charge/discharge high rate characteristics may be prepared.

The lithium secondary battery may be, for example, an all solid secondary battery.

A fibrous carbon-based material in the gamma sulfur-fibrous carbon-based material composite may be defined by length and diameter (e.g., circular diameter or non-circular major axis), an aspect ratio of the length to diameter may be about 2 or more, and a length of the fibrous carbon-based material may be about 1 micrometer (µm) to about 50 µm, about 2 µm to about 45 µm, about 3 µm to about 30 µm, or about 5 µm to about 30 µm and a diameter of about 10 nm to about 10 µm. In this regard, the length and diameter refer to average values.

The fibrous carbon-based material may include carbon nanofibers, carbon nanotubes, or any combination thereof and may include, for example, carbon nanofibers.

By having a length and diameter within the above-described ranges, the fibrous carbon-based material may easily form a conductive network in the cathode. A cross-section of the fibrous carbon-based material may have a circular shape or a polygonal shape such as a triangular shape or a quadrangular shape.

An aspect ratio of the fibrous carbon-based material may be, for example, about 2 or more, about 3 or more, about 4 or more, about 5 or more, about 10 or more, or about 20 or more. The aspect ratio of the fibrous carbon-based material may be, for example, about 2 to about 30, about 3 to about 30, about 4 to about 30, about 5 to about 30, about 10 to about 30, or about 20 to about 30. The aspect ratio of the fibrous carbon-based material may be, for example, about 2 to about 30, about 2 to about 20, about 2 to about 10, about 2 to about 8, about 2 to about 5, or about 2 to about 4. If (e.g., when) the aspect ratio of the fibrous carbon-based material is within the above ranges, the overall electronic conductivity of the composite may be improved, and local electronic conductivity imbalance in the composite may be further reduced.

In some embodiments, by utilizing the above-described composite, an extended ion conduction path may be secured in a cathode active material layer. Therefore, during charging/discharging of the lithium secondary battery, disconnection of an ion conduction path caused by a volume change of a cathode active material in the cathode active material layer may be more effectively prevented or reduced. As a result, the initial efficiency, discharge capacity, high rate characteristics, and/or lifespan characteristics of the lithium secondary battery may be improved.

The above-described carbon nanofibers may be controlled or selected to have improved conductivity by doping with nitrogen and fluorine and to reduce side reactions between a cathode active material and a sulfide-based solid electrolyte.

By utilizing the composite including the above-described fibrous carbon-based material, the brittleness of the cathode may be compensated for, enabling preparation of a cathode as a thick film, and thus, an all solid secondary battery having increased energy density may be prepared. In some embodiments, a volume change of the cathode active material occurring during charging/discharging may be accommodated dispersedly throughout the entire length thereof by including the fibrous carbon-based material, and thus, the volume change may be more effectively accommodated therein compared to a carbon-based material in the form of spherical particles. As a result, disconnection between a cathode active material and a solid electrolyte caused by a volume change of the cathode active material in the cathode active material layer may be suppressed or reduced, and uniformity of components in the cathode active material layer may be improved. As a result, the cycle characteristics of the all solid secondary battery may be improved.

The gamma sulfur-fibrous carbon-based material composite may have excellent or suitable ionic conductivity and electronic conductivity, and due to improvement of an ion/electron network, even if (e.g., when) a solid electrolyte amount is reduced in preparing the cathode active material layer, compared to a case of preparing the cathode active material layer without utilizing the gamma sulfur-fibrous carbon-based material composite, an all solid secondary battery having excellent or suitable energy density and initial efficiency and improved lifespan characteristics may be prepared. An amount of the sulfide-based solid electrolyte utilized in preparing the cathode active material layer may be about 5 parts by weight to about 40 parts by weight, or about 7 parts by weight to about 35 parts by weight, based on about 100 parts by weight of the cathode active material layer. An amount of the cathode active material utilized in preparing the cathode active material layer may be about 30 parts by weight to about 65 parts by weight, or about 30 parts by weight to about 60 parts by weight, based on about 100 parts by weight of the cathode active material layer.

The gamma sulfur-fibrous carbon-based material composite according to embodiments may be, for example, a gamma sulfur-carbon nanofiber composite.

An amount of the gamma sulfur-fibrous carbon-based material composite may be about 1 part by weight to about 30 parts by weight, about 1 part by weight to about 20 parts by weight, or about 1 part by weight to about 10 parts by weight, based on about 100 parts by weight of the total weight of the cathode active material layer. If (e.g., when) the amount of the gamma sulfur-fibrous carbon-based material composite is within the above ranges, rate characteristics may be improved due to improvement of an ion/electron network, and thus, a lithium secondary battery having an improved capacity retention ratio and improved energy density may be prepared.

The gamma sulfur-fibrous carbon-based material composite may have a Brunauer-Emmett-Teller (BET) specific surface area of about 10 m²/g or less, and a cross-section of the fibrous carbon-based material may have a circular shape or a polygonal shape such as a triangular shape or a quadrangular shape, and may further be doped with at least one selected from among nitrogen (N) and fluorine (F).

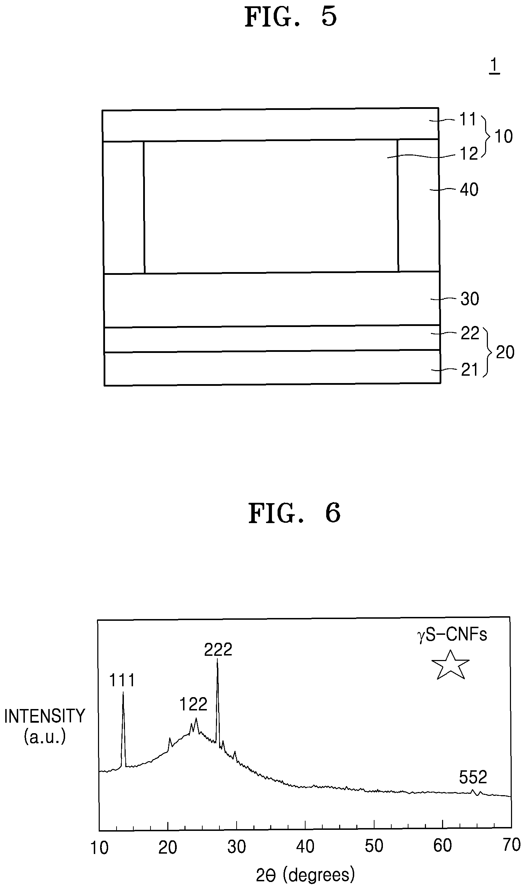

In an X-ray diffraction (XRD) spectrum for the gamma sulfur-carbon nanofiber composite, as shown in FIG. 6, a first peak may appear at a diffraction angle (2θ) of about 11° ± 2.0° corresponding to a crystal plane (111), a second peak may appear at a diffraction angle (2θ) in a range of about 18° to about 32° corresponding to a crystal plane (122), and a third peak may appear at a diffraction angle (2θ) in a range of about 27° to about 28° corresponding to a crystal plane (222).

The Li₂S composite may include a composite of Li₂S and a lithium salt, and the composite is represented by Li₂S-LiₐX_{b} (wherein 1≤a≤5 and 1≤b≤5), wherein X is I, Br, Cl, F, H, O, Se, Te, N, P, As, Sb, Al, B, OCI, PF₆, BF₄, SbF₆, AsF₆, ClO₄, AlO₂, AlCl₄, NOs, COs, BH₄, SO₄, BOs, PO₄, NCl, NCl₂, BN₂, or a combination thereof.

The composite of Li₂S and the lithium salt may be, for example, a product of mechanical milling of Li₂S and the lithium salt. The composite of Li₂S and the lithium salt may be, for example, a product of a mecahnochemical reaction between Li₂S and the lithium salt and thus may be distinguished from a simple mixture of Li₂S and the lithium salt. The simple mixture of Li₂S and the lithium salt may provide high interfacial resistance by failing to maintain a dense interface between Li₂S and the lithium salt, thereby increasing the internal resistance of the cathode.

In Li₂S-LiₐX_{b}, a may be, for example, 1, 2, 3, 4, or 5. b may be, for example, 1, 2, 3, 4, or 5. The lithium salt may be, for example, a compound not including sulfur (S). The lithium salt may be, for example, a binary compound or a ternary compound. The lithium salt may be, for example, a binary compound including lithium and one element selected from among Groups 13 to 17 of the periodic table of elements. The lithium salt may be, for example, a ternary compound including lithium and two elements selected from among Groups 13 to 17 of the periodic table of elements. The binary compound may include, for example, Lil, LiBr, LiCl, LiF, LiH, Li₂O, Li₂Se, Li₂Te, Li₃N, LisP, LisAs, Li₃Sb, Li₃Al₂, LiBs, or a combination thereof. The composite may include the binary compound, and thus, the ionic conductivity of the composite may be further improved. The cathode may include the composite, and thus, the internal resistance of the cathode may be further reduced. As a result, the cycle characteristics of an all solid secondary battery including the cathode may be further improved. The ternary compound may include, for example, Li₃OCl, LiPF₆, LiBF₄, LiSbF₆, LiAsF₆, LiClO₄, LiAlO₂, LiAlCl₄, LiNOs, Li₂CO₃, LiBH₄, Li₂SO₄, Li₃BO₃, Li₃PO₄, Li₄NCl, Li₅NCl₂, Li₃BN₂, or a combination thereof. The composite may include the ternary compound, and thus, the ionic conductivity of the composite may be further improved. The cathode may include the composite, and thus, the internal resistance of the cathode may be further reduced. As a result, the cycle characteristics of an all solid secondary battery including the solid electrolyte separator may be further improved.

The composite may further include a carbon-based material.

The carbon-based material may be, for example, any material including carbon atoms and available in the art as a conductive material. The carbon-based material may be, for example, crystalline carbon, amorphous carbon, or a combination thereof. The carbon-based material may be, for example, a calcined product of a carbon precursor. The carbon-based material may be, for example, a carbon nanostructure. The carbon nanostructure may be, for example, a one-dimensional carbon nanostructure, a two-dimensional carbon nanostructure, a three-dimensional carbon nanostructure, or a combination thereof. The carbon nanostructure may include, for example, carbon nanotubes, carbon nanofibers, carbon nanobelts, carbon nanorods, graphene, or a combination thereof. The carbon-based material may be, for example, a porous carbon-based material or a non-porous carbon-based material. The porous carbon-based material may include, for example, periodic and regular two-dimensional or three-dimensional pores. The porous carbon-based material may be, for example, carbon black such as Ketjen black, acetylene black, Denka black, thermal black, or channel black; graphite; activated carbon; or a combination thereof. The carbon-based material may be, for example, in a particle form (e.g., form of particles), a sheet form, a flake form, and/or the like. However, embodiments are not limited thereto, and any material available in the art as a carbon-based material may be utilized.

The composite may be a composite of Li₂S, a lithium salt, and a carbon-based material.

An amount of the carbon-based material included in the composite of Li₂S, the lithium salt, and the carbon-based material may be, for example, about 1 wt% to about 20 wt%, about 5 wt% to about 20 wt%, or about 10 wt% to about 20 wt%, based on the total weight of the composite. If (e.g., when) the amount of the carbon-based material excessively increases (e.g., is substantially high or higher than the highest end of the ranges), the energy density of a dry cathode film and all solid secondary battery may decrease. If (e.g., when) the amount of the carbon-based material excessively decreases (e.g., is substantially low or lower than the lowest end of the ranges), the electronic conductivity of the composite of Li₂S, the lithium salt, and the carbon-based material may decrease, thereby increasing the internal resistance of the dry cathode film. As a result, the cycle characteristics of the all solid secondary battery may deteriorate.

A Mohs hardness of each of the lithium salt and the carbon-based material may be greater than that of Li₂S. The Mohs hardness of Li₂S may be, for example, about 0.6 or less. The Mohs hardness of the lithium salt may be about 0.7 or more, about 0.8 or more, about 0.9 or more, about 1.0 or more, about 1.5 or more, or about 2.0 or more. If (e.g., when) the Mohs hardness of the lithium salt is within the above ranges, Li₂S may be more easily pulverized during a milling process, and a solid solution of Li₂S and the lithium salt may be more easily formed. A Mohs hardness of LiI may be, for example, about 2.0. The Mohs hardness of the carbon-based material may be about 0.7 or more, about 0.8 or more, about 0.9 or more, about 1.0 or more, about 1.2 or more, or about 1.5 or more. If (e.g., when) the Mohs hardness of the carbon-based material is within the above ranges, Li₂S may be more easily pulverized during a milling process, and a solid solution of Li₂S, the lithium salt, and the carbon-based material may be more easily formed. A Mohs hardness of the carbon nanofibers (CNFs) may be, for example, about 1.5.

The carbon-based material may include, for example, a fibrous carbon-based material. The composite of Li₂S, the lithium salt, and the carbon-based material may include the fibrous carbon-based material, and thus, the electronic conductivity of the composite of Li₂S, the lithium salt, and the carbon-based material may be further improved. If (e.g., when) the composite of Li₂S, the lithium salt, and the carbon-based material includes the fibrous carbon-based material, electron conduction may be performed more easily from the surface to the inside of the composite of Li₂S, the lithium salt, and the carbon-based material. The internal resistance of the dry cathode film including the composite of Li₂S, the lithium salt, and the carbon-based material may be reduced, and the cycle characteristics of the all solid secondary battery including the dry cathode film may be further improved.

Preferred the Li₂S composite comprises a carbon-based material, wherein the carbon-based material comprises a fibrous carbon-based material, wherein the fibrous carbon-based material comprises a carbon nanostructure, wherein the carbon nanostructure comprises carbon nanofibers, carbon nanotubes, carbon nanobelts, carbon nanorods, or a combination thereof, and an amount of the carbon-based material is 1 wt% to 20 wt% based on a total weight of the composite.

An aspect ratio of the fibrous carbon-based material of the composite of Li₂S, the lithium salt, and the carbon-based material is the same as aspect ratio of the fibrous carbon-based material of the gamma sulfur-fibrous carbon-based material composite. If (e.g., when) the aspect ratio of the fibrous carbon-based material of the composite of Li₂S, the lithium salt, and the carbon-based material is within the above ranges, the overall electronic conductivity of the composite of Li₂S, the lithium salt, and the carbon-based material may be improved, and local electronic conductivity imbalance in the composite of Li₂S, the lithium salt, and the carbon-based material may be further reduced.

The fibrous carbon-based material may include, for example, a carbon nanostructure. The carbon nanostructure may include, for example, carbon nanofibers (CNFs), carbon nanotubes (CNTs), carbon nanobelts, carbon nanorods, or a combination thereof.

The carbon nanostructure may form a primary carbon nanostructure including one carbon nanostructure and a secondary carbon nanostructure including a plurality of carbon nanostructures that are aggregated.

A diameter (e.g., an average size, diameter, or major axis) of the primary carbon nanostructure may be, for example, about 1 nanometer (nm) to about 200 nm, about 1 nm to about 150 nm, about 1 nm to about 100 nm, about 1 nm to about 50 nm, about 1 nm to about 30 nm, or about 1 nm to about 20 nm. A length of the primary carbon nanostructure may be, for example, about 10 nm to about 2 µm, about 10 nm to about 1.5 µm, about 10 nm to about 1 µm, about 10 nm to about 500 nm, about 10 nm to about 400 nm, about 10 nm to about 300 nm, about 10 nm to about 200 nm, or about 10 nm to about 100 nm. The diameter and length of the primary carbon nanostructure may be measured from images obtained by utilizing a scanning electron microscope (SEM) or a transmission electron microscope (TEM). In some embodiments, the diameter and/or length of the primary carbon nanostructure may be measured by laser diffraction.

The secondary carbon nanostructure may be, for example, a structure formed by assembling or agglomerating the primary carbon nanostructures to form a bundle-type or kind or rope-type or kind carbon nanostructure in whole or in part. The secondary carbon nanostructure may include, for example, a bundle-type or kind carbon nanostructure, a rope-type or kind carbon nanostructure, or a combination thereof. A diameter (e.g., an average size, diameter, or major axis) of the secondary carbon nanostructure may be, for example, about 2 nm to about 200 nm, about 3 nm to about 150 nm, about 5 nm to about 100 nm, about 5 nm to about 50 nm, about 5 nm to about 30 nm, or about 5 nm to about 20 nm. A length of the secondary carbon nanostructure may be, for example, about 20 nm to about 2 µm, about 30 nm to about 1.5 µm, about 50 nm to about 1 µm, about 50 nm to about 500 nm, about 50 nm to about 400 nm, about 50 nm to about 300 nm, about 50 nm to about 200 nm, or about 50 nm to about 100 nm or more. The diameter and length of the secondary carbon nanostructure may be measured from images obtained by utilizing an SEM or an optical microscope. In some embodiments, the diameter and/or length of the secondary carbon nanostructure may be measured by laser diffraction. For example, the secondary carbon nanostructure may be converted into the primary carbon nanostructure via dispersion in a solvent and then utilized to prepare the composite of Li₂S, the lithium salt, and the carbon-based material.

The composite of Li₂S and the lithium salt or the composite of Li₂S, the lithium salt, and the carbon-based material may include, for example, a solid solution of Li₂S and the lithium salt. The composite may include the solid solution of Li₂S and the lithium salt, and thus, the ionic conductivity of the composite may increase. For example, the solid solution of Li₂S and the lithium salt may include lithium ions located in Li₂S crystallites, and thus, the ionic conductivity of the solid solution of Li₂S and the lithium salt may be improved, compared to the ionic conductivity of Li₂S. As a result, the ionic conductivity of the composite may be improved, and the internal resistance of the composite may be reduced. The cathode may include the composite, and thus, the internal resistance of the cathode may be further reduced. As a result, the cycle characteristics of an all solid secondary battery including the cathode may be further improved.

A size of Li₂S crystallites obtained from an XRD spectrum of the composite of Li₂S and the lithium salt or the composite of Li₂S, the lithium salt, and the carbon-based material may be, for example, about 20 nm or less, about 15 nm or less, or about 10 nm or less. The size of Li₂S crystallites obtained from the XRD spectrum of the composite may be, for example, about 1 nm to about 20 nm, about 1 nm to about 15 nm, or about 3 nm to about 10 nm. If (e.g., when) the size of the Li₂S crystallites decreases, a contact area between Li₂S and the lithium salt may further increase. If (e.g., when) the contact area between Li₂S and the lithium salt further increases, the ionic conductivity of the composite of Li₂S and the lithium salt may further increase. The cathode may include the composite, and thus, the internal resistance of the cathode may be further reduced. As a result, the cycle characteristics of an all solid secondary battery including the cathode may be further improved.

Due to the low ionic conductivity of Li₂S, a composite with a lithium salt may be formed to overcome these disadvantages. The composite of Li₂S and the lithium salt or the composite of Li₂S, the lithium salt, and the carbon-based material may provide improved ionic conductivity, compared to Li₂S alone. An amount of Li₂S in the composite may be about 50 wt% to about 95 wt%, about 50 wt% to about 90 wt%, about 50 wt% to about 80 wt%, or about 50 wt% to about 70 wt%, based on the total weight of the composite of Li₂S and the lithium salt. If (e.g., when) the composite includes Li₂S in an amount within the above ranges, a cathode having improved ionic conductivity and improved durability may be prepared. An amount of the lithium salt in the composite of Li₂S and the lithium salt may be about 5 wt% to about 50 wt%, about 10 wt% to about 50 wt%, about 20 wt% to about 50 wt%, or about 30 wt% to about 50 wt%, based on the total weight of the composite of Li₂S and the lithium salt.

A molar ratio of Li₂S to the lithium salt in the composite may be, for example, about 50:50 to about 95:5, about 60:40 to about 95:5, about 60:40 to about 90:10, about 65:35 to about 90:10, about 65:35 to about 85:15, or about 70:30 to about 85:15. The molar ratio of Li₂S to the lithium salt in the composite may be, for example, about 50:50 to about 95:5, about 50:50 to about 90:10, about 50:50 to about 85:15, about 50:50 to about 80:20, about 50:50 to about 75:25, or about 50:50 to about 70:30. If (e.g., when) the molar ratio of Li₂S to the lithium salt is within the above ranges, the cycle characteristics of a lithium battery including the composite cathode active material may be further improved. If (e.g., when) the molar ratio of Li₂S is excessively high, the effects of the lithium salt on increasing ionic conductivity may be negligible. If (e.g., when) the molar ratio of Li₂S is excessively high, the energy density of a lithium battery including the composite cathode active material may decrease.

An amount of the lithium salt in the composite of Li₂S, the lithium salt, and the carbon-based material may be, for example, about 1 wt% to about 40 wt%, about 5 wt% to about 35 wt%, about 10 wt% to about 35 wt%, about 15 wt% to about 35 wt%, about 20 wt% to about 35 wt%, or about 25 wt% to about 35 wt%, based on the total weight of the composite of Li₂S, the lithium salt, and the carbon-based material. If (e.g., when) the amount of the lithium salt excessively increases (e.g., is substantially high or higher than the highest end of the ranges), the energy density of the all solid secondary battery may decrease. If (e.g., when) the amount of the lithium salt is excessively low (e.g., substantially low or lower than the lowest end of the ranges), the ionic conductivity of the composite of Li₂S, the lithium salt, and the carbon-based material may decrease, thereby increasing the internal resistance of a dry cathode film. As a result, the cycle characteristics of an all solid secondary battery including the dry cathode film may deteriorate.

A molar ratio of Li₂S to the lithium salt in the composite of Li₂S, the lithium salt, and the carbon-based material, may be, for example, about 50:50 to about 95:5, about 60:40 to about 95:5, about 60:40 to about 90:10, about 65:35 to about 90:10, about 65:35 to about 85:15, or about 70:30 to about 85:15. The molar ratio of Li₂S to the lithium salt in the composite of Li₂S, the lithium salt, and the carbon-based material, may be, for example, about 50:50 to about 95:5, about 50:50 to about 90:10, about 50:50 to about 85:15, about 50:50 to about 80:20, about 50:50 to about 75:25, or about 50:50 to about 70:30. If (e.g., when) the molar ratio of Li₂S to the lithium salt is within the above ranges, the cycle characteristics of an all solid lithium battery including the dry cathode film may be further improved. If (e.g., when) the molar ratio of Li₂S is excessively high, the effects of the lithium salt on increasing ionic conductivity may be negligible. If (e.g., when) the molar ratio of Li₂S is excessively high, the energy density of a lithium battery including the composite cathode active material may decrease.

Ionic conductivity of the composite of Li₂S and the lithium salt or the composite of Li₂S, the lithium salt, and the carbon-based material may be, for example, about 1×10⁻⁵ S/cm or more, about 2×10⁻⁵ S/cm or more, about 4×10⁻⁵ S/cm or more, about 6×10⁻⁵ S/cm or more, about 8×10⁻⁵ S/cm or more, or about 1×10⁻⁴ S/cm or more at about 25 °C. The ionic conductivity may be measured by, for example, electrochemical impedance spectroscopy, DC polarization method, and/or the like. If (e.g., when) the ionic conductivity of the composite of Li₂S and the lithium salt is within the above ranges, the internal resistance of the cathode including the composite of Li₂S and the lithium salt may be further reduced. The cycle characteristics of an all solid secondary battery including the cathode may be improved.

The Li₂S-containing composite may further include a solid electrolyte. The solid electrolyte may further include a sulfide-based solid electrolyte.

An amount of the composite of Li₂S and the lithium salt may be, for example, about 0.1 wt% to about 20 wt%, about 0.5 wt% to about 20 wt%, about 0.5 wt% to about 15 wt%, about 0.5 wt% to about 10 wt%, or about 1 wt% to about 5 wt%, based on the total weight of the composite of Li₂S and the lithium salt and the sulfide-based solid electrolyte. The amount of the composite of Li₂S and the lithium salt may be, for example, about 0.1 to about 20 wt%, about 0.5 to about 20 wt%, about 0.5 to about 15 wt%, about 0.5 to about 10 wt%, or about 1 to about 5 wt%, based on the total weight of the cathode. If (e.g., when) the cathode includes the composite of Li₂S and the lithium salt in an amount within the above ranges, the durability of the cathode may be further improved, and the internal resistance of the cathode may be further reduced.

The cathode active material layer may include, for example, particles of the composite of Li₂S and the lithium salt and particles of the sulfide-based solid electrolyte. A particle size of the composite of Li₂S and the lithium salt may be smaller than that of the sulfide-based solid electrolyte. The particle size of the composite of Li₂S and the lithium salt may be about 90 % or less, about 80 % or less, about 60 % or less, about 40 % or less, about 20 % or less, or about 10 % or less of the particle size of the sulfide-based solid electrolyte. The particles of the composite of Li₂S and the lithium salt may be arranged, for example, in pores between a plurality of sulfide-based solid electrolytes. The particles of the composite of Li₂S and the lithium salt may be arranged in the pores between the plurality of sulfide-based solid electrolytes, and thus, formation of pinholes in the cathode may be suppressed or reduced, and the internal resistance of the cathode may be reduced. As a result, the durability of the cathode may be improved.

A particle size (or particle diameter) of the sulfide-based solid electrolyte (e.g., in a form of particles) may be, for example, about 1 µm to about 10 µm, about 1 µm to about 8 µm, about 1 µm to about 6 µm, about 1 µm to about 5 µm, or about 1 µm to about 3 µm. If (e.g., when) the particle size of the sulfide-based solid electrolyte is within the above ranges, the durability of the cathode may be further improved. The particle size of the sulfide-based solid electrolyte may be measured by utilizing, for example, laser diffraction, an SEM, and/or the like. The particle size of the sulfide-based solid electrolyte may be an arithmetic average of particle diameters of a plurality of particles measured by utilizing software from an SEM image.

The particle size of the composite of Li₂S and the lithium salt may be, for example, about 10 µm or less, about 8 µm or less, about 5 µm or less, about 2 µm or less, about 1.5 µm or less, or about 1 µm or less. The particle size of the composite may be, for example, about 1 µm to about 10 µm, about 2 µm to about 10 µm, about 2 µm to about 8 µm, or about 3 µm to about 8 µm. The particle size of the composite may be, for example, about 0.1 µm to about 10 µm, about 0.1 µm to about 8 µm, about 0.1 µm to about 5 µm, about 0.1 µm to about 2 µm, about 0.1 µm to about 1.5 µm, or about 0.1 µm to about 1 µm or less. If (e.g., when) the particle size of the composite of Li₂S and the lithium salt is in the above ranges, the particles may be more easily arranged in the pores between the plurality of sulfide-based solid electrolytes, formation of pinholes in the cathode may be suppressed or reduced, and the internal resistance of the cathode may be reduced. As a result, the durability of the cathode may be improved. The particle size of the composite of Li₂S and the lithium salt may be measured by utilizing, for example, laser diffraction, SEM, and/or the like. The particle size of the composite of Li₂S and the lithium salt may be, for example, an arithmetic average of particle diameters of a plurality of particles measured by utilizing software from an SEM image.

A particle size of Li₂S included in the composite cathode active material, that is, a particle size of Li₂S included in the composite, may be, for example, about 2 µm or less, about 1.5 µm or less, or about 1 µm or less. The particle size of Li₂S may be, for example, about 0.1 µm to about 2 µm, about 0.1 µm to about 1.5 µm, or about 0.1 µm to about 1 µm. If (e.g., when) the particle size of Li₂S is within the above ranges, a volume change may be suppressed or reduced during charging/discharging, and thus, deterioration of the composite cathode active material including the composite may be suppressed or reduced during charging/discharging. If (e.g., when) the particle size of Li₂S excessively increases (e.g., is substantially high or higher than the highest end of the ranges), a volume change of the composite during charging/discharging may increase, and thus, deterioration of the composite cathode active material including the composite may be accelerated. As a result, the cycle characteristics of a secondary battery including the composite cathode active material may deteriorate.

A ratio of the particle size of the sulfide-based solid electrolyte to the particle size of the composite of Li₂S and the lithium salt may be, for example, about 2:1 to about 200:1, about 2:1 to about 100:1, or about 2:1 to about 50:1. If (e.g., when) the ratio of the particle size of the sulfide-based solid electrolyte to the particle size of the composite of Li₂S and the lithium salt is within the above ranges, generation of defects in the cathode may be suppressed or reduced, and thus, the durability of the cathode may be further improved. If (e.g., when) the ratio of the particle size of the sulfide-based solid electrolyte to the particle size of the composite of Li₂S and the lithium salt is excessively small, the porosity of the cathode may excessively increase, and thus, the durability of the cathode may be reduced. If (e.g., when) the ratio of the particle size of the sulfide-based solid electrolyte to the particle size of the composite of Li₂S and the lithium salt is excessively large (e.g., is substantially large, or larger than the highest end of the ranges), it may be difficult to uniformly disperse the particles of the composite of Li₂S and the lithium salt in the cathode.

By utilizing a cathode including the above-described composite, there is no need to utilize a lithium metal anode as an anode, and thus, an anode-less all solid secondary battery may be utilized, thereby providing an all solid secondary battery having improved energy density. In some embodiments, the composite cathode active material may include the composite, and thus, the cycle characteristics of an all solid secondary battery including the composite cathode active material may be improved. For example, the high rate characteristics of a secondary battery including the composite cathode active material may be improved.

In the cathode active material layer, the solid electrolyte may be, for example, a sulfide-based solid electrolyte. The solid electrolyte included in the cathode may be the same as or different from a solid electrolyte included in a solid electrolyte layer. The solid electrolyte included in the cathode active material layer may have a smaller average particle diameter D50 than that of a solid electrolyte included in an electrolyte layer. For example, an average particle diameter D50 of the solid electrolyte included in the cathode active material layer may be about 90 % or less, about 80 % or less, about 70 % or less, about 60 % or less, about 50 % or less, about 40 % or less, about 30 % or less, or about 20 % or less of an average particle diameter D50 of the solid electrolyte included in the solid electrolyte layer. The average particle diameter D50 refers to, for example, a median particle diameter D50. The median particle diameter D50 refers to a particle size corresponding to an about 50 % cumulative volume if (e.g., when) a particle size distribution measured by laser diffraction is calculated from particles having a smaller particle size.

An amount of the solid electrolyte may be about 10 parts by weight to about 60 parts by weight, about 10 parts by weight to about 50 parts by weight, about 20 parts by weight to about 50 parts by weight, or about 30 parts by weight to about 50 parts by weight, based on about 100 parts by weight of the cathode active material layer.

### All solid secondary battery

An all solid secondary battery according to embodiments may include: a cathode; an anode; and a solid electrolyte layer arranged between the cathode and the anode, wherein the cathode may include the cathode according to embodiments.

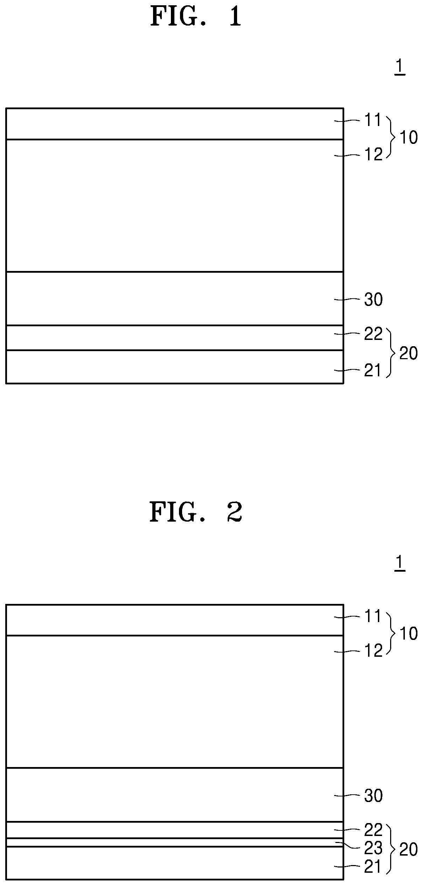

Referring to FIGS. 1 to 5, an all solid secondary battery 1 may include: a cathode 10; an anode 20; and an electrolyte layer 30 arranged between the cathode 10 and the anode 20.

### Cathode

### Cathode: Cathode active material

Referring to FIGS. 1 to 5, the cathode 10 may include: a cathode current collector 11; and a cathode active material layer 12 arranged on a side (e.g., one or both (e.g., opposite) sides) of the cathode current collector 11. The cathode active material layer 12 may include, as a cathode active material, Li₂S, a Li₂S composite, or a combination thereof.

The cathode active material layer 12 may further include another cathode active material in addition to the above-described cathode active materials.

The other cathode active material may include, for example, a Li₂S-containing composite. The Li₂S-containing composite may include, for example, a composite of Li₂S and carbon, a composite of Li₂S, carbon, and a solid electrolyte, a composite of Li₂S and a solid electrolyte, a composite of Li₂S, a lithium salt, and carbon, a composite of Li₂S and a metal carbide, a composite of Li₂S, carbon, and a metal carbide, a composite of Li₂S and a metal nitride, a composite of Li₂S, carbon, and a metal nitride, or a combination thereof.

The composite of Li₂S and carbon may include carbon. Carbon may be, for example, any material including carbon atoms and available in the related art as a conductive material. Carbon may be, for example, crystalline carbon, amorphous carbon, or a combination thereof. Carbon may be, for example, a calcined product of a carbon precursor. Carbon may be, for example, a carbon nanostructure. The carbon nanostructure may be, for example, a one-dimensional carbon nanostructure, a two-dimensional carbon nanostructure, a three-dimensional carbon nanostructure, or a combination thereof. The carbon nanostructure may include, for example, carbon nanotubes, carbon nanofibers, carbon nanobelts, carbon nanorods, graphene, graphene oxide (GO), reduced graphene oxide (rGO), graphene balls (GBs), or a combination thereof. Carbon may be, for example, porous carbon or non-porous carbon. The porous carbon may include, for example, periodic and regular two-dimensional or three-dimensional pores. The porous carbon may be, for example, carbon black such as Ketjen black, acetylene black, Denka black, thermal black, or channel black; graphite; activated carbon; or a combination thereof. Carbon may be, for example, in a particle form (e.g., form of particles), a sheet form, a flake form, and/or the like. However, embodiments are not limited thereto, and any material available in the art as carbon may be utilized. A method of preparing the composite of Li₂S and carbon may be a dry method, a wet method, or a combination thereof. However, embodiments are not limited thereto, and any method available in the art to prepare the composite of Li₂S and carbon, such as milling, heat treatment, or deposition, may be utilized without limitation.

The composite of Li₂S, carbon, and the solid electrolyte may include carbon and the solid electrolyte. For descriptions of carbon, the above-described composite of Li₂S and carbon may be referred to. The solid electrolyte may be, for example, any amorphous solid electrolyte available in the art as an ion conductive material. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may include, for example, Li, S, and P and may optionally further include a halogen element. The sulfide-based solid electrolyte may be selected from sulfide-based solid electrolytes utilized in the solid electrolyte layer. The sulfide-based solid electrolyte may have an ionic conductivity of, for example, about 1×10⁻⁵ S/cm or more at room temperature. The sulfide-based solid electrolyte may include, for example, at least one selected from among Li₃PO₄-Li₂SO₄, Li₂S-P₂S₅, Li₂S-P₂S₅-LiX (wherein X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are positive numbers and Z is one of Ge, Zn, and Ga), Li₂S-GeS₂, Li₂S-SiS₂-Li₃PO₄, Li₂S-SiS₂-LiₚMO_{q} (wherein p and q are positive numbers and M is one of P, Si, Ge, B, Al, Ga, and In), Li₇₋ₓPS₆₋ₓClₓ (wherein 0≤x≤2), Li₇₋ₓPS₆₋ₓBrₓ (wherein 0≤x≤2), and Li₇₋ₓPS₆₋ₓIₓ (wherein 0≤x≤2). The oxide-based solid electrolyte may include, for example, Li, O, and a transition metal element, and may optionally further include another element. The oxide-based solid electrolyte may be, for example, a solid electrolyte having an ionic conductivity of about 1×10⁻⁵ S/cm or more at room temperature. The oxide-based solid electrolyte may be selected from among oxide-based solid electrolytes utilized in the solid electrolyte layer. The solid electrolyte may be, for example, a mixture of a sulfide-based solid electrolyte and a lithium salt. For example, the solid electrolyte may be a mixture of Li₃PO₄-Li₂SO₄ and a binary lithium salt or a mixture of Li₃PO₄-Li₂SO₄ and a ternary lithium salt.

The composite of Li₂S and the solid electrolyte may include the solid electrolyte. For descriptions of the solid electrolyte, the above-described composite of Li₂S, carbon, and the solid electrolyte may be referred to.

The composite of Li₂S, the lithium salt, and carbon may include a lithium salt compound and carbon. The lithium salt compound may not include (e.g., may exclude), for example, sulfur (S) atoms. The lithium salt compound may be, for example, a binary compound including lithium and one element selected from among Groups 13 to 17 of the periodic table of elements. The binary compound may include, for example, at least one selected from among LiF, LiCl, LiBr, Lil, LiH, Li₂S, Li₂O, Li₂Se, Li₂Te, Li₃N, Li₃P, Li₃As, Li₃Sb, LiI₃, and LiB₃. The lithium salt compound may be, for example, a ternary compound including lithium and two elements selected from among Groups 13 to 17 of the periodic table of elements. The ternary compound may include, for example, at least one selected from among Li₃OCl, LiPF₆, LiBF₄, LiSbF₆, LiAsF₆, LiClO₄, LiAlO₂ LiAlCl₄, LiNO₃, Li₂CO₃, LiBH₄, Li₂SO₄, Li₂BO₃, Li₃PO₄, Li₄NCl, Li₅NCl₂, and Li₃BN₂. The lithium salt compound may be, for example, at least one lithium halide compound selected from among LiF, LiCl, LiBr, and Lil. For descriptions of carbon, the above-described composite of Li₂S and carbon may be referred to.

The composite of Li₂S and the metal carbide may include the metal carbide. The metal carbide may be, for example, a two-dimensional metal carbide. The two-dimensional metal carbide may be, for example, MXene. The two-dimensional metal carbide may be represented by, for example, Mₙ₊₁CₙTₓ (wherein M is a transition metal, T is a terminal group, T is O, OH, and/or F, n=1, 2, or 3, and x is the number of terminal groups). The two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃Tₓ, or a combination thereof. A surface of the two-dimensional metal carbide may be terminated with O, OH, and/or F.

The composite of Li₂S, carbon, and the metal carbide may include carbon and the metal carbide. For descriptions of carbon, the above-described composite of Li₂S and carbon may be referred to. For descriptions of the metal carbide, the above-described composite of Li₂S and the metal carbide may be referred to.

The composite of Li₂S and the metal nitride may include the metal nitride. The metal nitride may be, for example, a two-dimensional metal nitride. The two-dimensional metal nitride may be represented by, for example, Mₙ₊₁NₙTₓ (wherein M is a transition metal, T is a terminal group, T is O, OH, and/or F, n=1, 2, or 3, and x is the number of terminal groups). A surface of the two-dimensional metal nitride may be terminated with O, OH, and/or F.

The composite of Li₂S, carbon, and the metal nitride may include carbon and the metal nitride. For descriptions of carbon, the above-described composite of Li₂S and carbon may be referred to. For descriptions of the metal carbide, the above-described composite of Li₂S and the metal nitride may be referred to.

A size of the cathode active material may be, for example, about 0.1 µm to about 50 µm, about 0.5 µm to about 30 µm, about 0.5 µm to about 20 µm, or about 1 µm to about 10 µm. A size of Li₂S may be, for example, about 1 nm to about 10 µm, about 10 nm to about 5 µm, about 10 nm to about 3 µm, or about 10 nm to about 1 µm. A size of the Li₂S-containing composite may be, for example, about 0.1 µm to about 50 µm, about 0.5 µm to about 30 µm, about 0.5 µm to about 20 µm, or about 1 µm to about 10 µm.

The cathode active material layer 12 may further include, for example, a sulfide-based compound that is different from the above-described cathode active material. The sulfide-based compound may be, for example, a compound including a metal element other than Li and sulfur. The sulfide-based compound may be, for example, a compound including a metal element belonging to Groups 1 to 14 of the periodic table of elements and having an atomic weight of about 10 or more and sulfur. The sulfide-based compound may be, for example, FeS₂, VS₂, NaS, MnS, FeS, NiS, CuS, or a combination thereof. The cathode active material layer 12 may further include the sulfide-based compound, and thus, the cycle characteristics of the all solid secondary battery 1 may be further improved. An amount of the sulfide-based compound included in the cathode active material layer 12 may be 10 wt% or less, 5 wt% or less, 3 wt% or less, or 1 wt% or less, based on the total weight of the cathode active material layer 12.

The cathode active material may have, for example, a particle shape such as a spherical shape or an oval shape. A particle diameter of the cathode active material is not limited and may be in a range applicable to a cathode active material of an all solid secondary battery in the related art. An amount of the cathode active material in the cathode 10 is also not limited and may be in a range applicable to a cathode of an all solid secondary battery in the related art. An amount of the cathode active material included in the cathode active material layer 12 may be, for example, about 30 wt% to about 99 wt%, about 30 wt% to about 90 wt%, about 30 wt% to about 80 wt%, about 30 wt% to about 70 wt%, or about 30 wt% to about 50 wt%, based on the total weight of the cathode active material layer 12.

### Cathode: Conductive material

The cathode active material layer 12 may further include a conductive material. The conductive material may be, for example, a carbon-based conductive material, a metal-based conductive material, or a combination thereof. The carbon-based conductive material may be, for example, graphite, carbon black, acetylene black, Ketjen black, carbon fibers, or a combination thereof. However, embodiments are not limited thereto, and any material available in the art as a carbon-based conductive material may be utilized. The metal-based conductive material may be metal powder, metal fibers, or a combination thereof. However, embodiments are not limited thereto, and any material available in the art as a metal-based conductive material may be utilized. An amount of the conductive material included in the cathode active material layer 12 may be, for example, about 1 wt% to about 30 wt%, about 1 wt% to about 20 wt%, or about 1 wt% to about 10 wt%, based on the total weight of the cathode active material layer 12.

### Cathode: Binder

The cathode active material layer 12 may further include a binder. The binder may be, for example, styrene butadiene rubber (SBR), polytetrafluoroethylene, polyvinylidene fluoride, polyethylene, and/or the like. However, embodiments are not limited thereto, and any material available in the art as a binder may be utilized. An amount of the binder included in the cathode active material layer 12 may be, for example, about 1 wt% to about 10 wt% based on the total weight of the cathode active material layer 12. The binder may not be provided.

### Cathode: Other additives

The cathode active material layer 12 may further include, for example, additives such as a filler, a coating agent, a dispersant, and an ion-conductive adjuvant, in addition to the above-described cathode active material, solid electrolyte, binder, and conductive material.

For use as the filler, coating agent, dispersant, and ion-conductive adjuvant included in the cathode active material layer 12, suitable materials commonly utilized in an electrode of an all solid secondary battery may be utilized.

### Cathode: Cathode current collector

The cathode current collector 11 may be provided as a plate, foil, and/or the like including, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may not be provided. A thickness of the cathode current collector 11 may be, for example, about 1 µm to about 100 µm, about 1 µm to about 50 µm, about 5 µm to about 25 µm, or about 10 µm to about 20 µm.

The cathode current collector 11 may include, for example, a base film and a metal layer arranged on a side (e.g., one or both (e.g., opposite) sides) of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. The base film may include an insulating thermoplastic polymer, and thus, the base film may soften or liquefy in the event of a short circuit to stop operation of the battery, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may act as an electrochemical fuse and may be cut in the event of overcurrent, thereby performing a short circuit prevention function. By adjusting a thickness of the metal layer, a limit current and a maximum current may be adjusted. The metal layer may be plated or deposited on the base film. If (e.g., when) the thickness of the metal layer decreases, a limit current and/or a maximum current of the cathode current collector 11 may decrease, and thus, the stability of a lithium battery may be improved in the event of a short circuit. A lead tab may be added onto the metal layer for external connection. The lead tab may be welded to the metal layer or a metal layer/base film stack by ultrasonic welding, laser welding, spot welding, and/or the like. The metal layer may be electrically connected to the lead tab while the base film and/or the metal layer is melted during welding. A metal chip may further be added between the metal layer and the lead tab for stronger welding between the metal layer and the lead tab. The metal chip may be a flake including the same material as the metal of the metal layer. The metal chip may be, for example, a metal foil, a metal mesh, and/or the like. The metal chip may be, for example, an aluminum foil, a copper foil, an SUS foil, and/or the like. The metal chip may be arranged on the metal layer and then welded to the lead tab, and thus, the lead tab may be welded to a metal chip/metal layer stack or a metal chip/metal layer/base film stack. The metal layer or the metal layer/metal chip stack may be electrically connected to the lead tab while the base film, the metal layer, and/or the metal chip are melted during welding. A metal chip and/or a lead tab may be added onto a portion of the metal layer. A thickness of the base film may be, for example, about 1 µm to about 50 µm, about 1.5 µm to about 50 µm, about 1.5 µm to about 40 µm, or about 1 µm to about 30 µm. If (e.g., when) the thickness of the base film is within the above ranges, the weight of an electrode assembly may be more effectively reduced. A melting point of the base film may be, for example, about 100 °C to about 300 °C, about 100 °C to about 250 °C or less, or about 100 °C to about 200 °C. If (e.g., when) the melting point of the base film is within the above ranges, the base film may be melted and easily coupled to the lead tab in a process of welding the lead tab. To improve adhesion between the base film and the metal layer, surface treatment such as corona treatment may be performed on the base film. A thickness of the metal layer may be, for example, about 0.01 µm to about 3 µm, about 0.1 µm to about 3 µm, about 0.1 µm to about 2 µm, or about 0.1 µm to about 1 µm. If (e.g., when) the thickness of the metal layer is within the above ranges, the stability of an electrode assembly may be secured while maintaining conductivity. A thickness of the metal chip may be, for example, about 2 µm to about 10 µm, about 2 µm to about 7 µm, or about 4 µm to about 6 µm. If (e.g., when) the thickness of the metal chip is within the above ranges, connection between the metal layer and the lead tab may be performed more easily. The cathode current collector 11 may have the above-described structure, and thus, the weight of the cathode may be reduced, thereby improving the energy density of the cathode 10 and a lithium battery.

### Cathode: Inactive member

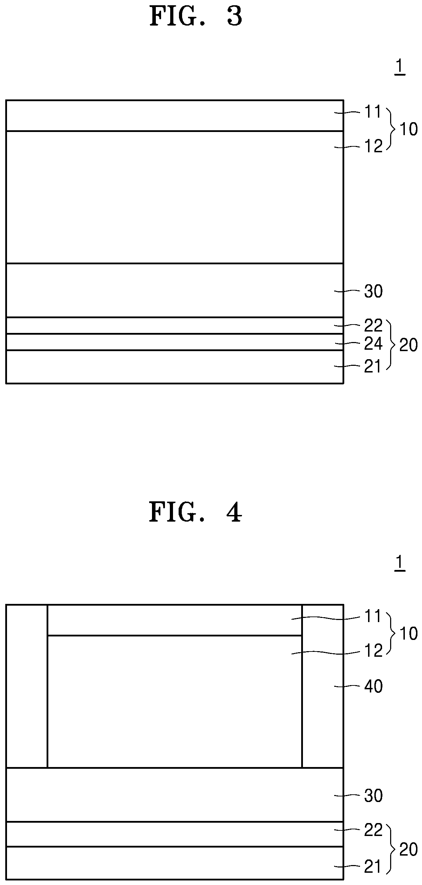

Referring to FIGS. 4 and 5, the cathode 10 may include the cathode current collector 11, a carbon coating layer arranged on a side surface (e.g., at least one side or surface (e.g., one or both (e.g., opposite) sides)) of the cathode current collector 11, and the cathode active material layer 12 arranged on the carbon coating layer. An interlayer may be further arranged between the carbon coating layer and the cathode active material layer 12 arranged thereon.

An inactive member 40 may be arranged on a side surface (e.g., at least one side surface (e.g., one or both (e.g., opposite) side surfaces) of the cathode 10. Referring to FIG. 4, the inactive member 40 may be arranged on a side surface (e.g., at least one side surface (e.g., one or both (e.g., opposite) side surfaces) of each of the cathode active material layer 12 and the cathode current collector 11. Referring to FIG. 5, the inactive member 40 may be arranged on a side surface (e.g., at least one side surface (e.g., one or both (e.g., opposite) side surfaces)) of the cathode active material layer 12 and may be arranged between the solid electrolyte layer 30 and (e.g., on a or bottom surface or side of) the cathode current collector 11 facing the electrolyte layer 30. The inactive member 40 may not be arranged on another side or surface (e.g., a top surface or side) of the cathode current collector 11 (facing oppositely away from the solid electrolyte layer 30).

By including the inactive member 40, occurrence of cracks may be prevented or reduced in the electrolyte layer 30 during manufacturing and/or charging/discharging of the all solid secondary battery 1, thereby improving the cycle characteristics of the all solid secondary battery 1. In the all solid secondary battery 1 that does not include the inactive member 40, a substantially non-uniform pressure may be applied to the electrolyte layer 30 in contact with the cathode 10 during manufacturing and/or charging/discharging of the all solid secondary battery 1 to cause cracks in the electrolyte layer 30, and a lithium metal may be grown through the cracks to increase the possibility of occurrence of a short circuit.

In the all solid secondary battery 1, a thickness of the inactive member 40 may be greater than a thickness of the cathode active material layer 12 or the same as the thickness of the cathode active material layer 12. In some embodiments, in the all solid secondary battery 1, the thickness of the inactive member 40 may be substantially the same as that of the cathode 10. If (e.g., when) the thickness of the inactive member 40 is the same as that of the cathode 10, a substantially uniform pressure may be applied between the positive cathode 10 and the electrolyte layer 30, and the cathode 10 may be in sufficiently close contact with the electrolyte layer 30, thereby reducing the interfacial resistance between the cathode 10 and the electrolyte layer 30. In some embodiments, the electrolyte layer 30 may be sufficiently sintered during a pressing/manufacturing process of the all solid secondary battery 1, and thus, the internal resistance of the electrolyte layer 30 and the all solid secondary battery 1 including the same may be reduced.

The inactive member 40 may surround side surfaces of the cathode 10 and may be in contact with the electrolyte layer 30. The inactive member 40 may be around or surround the side surfaces of the cathode 10 and be in contact with the electrolyte layer 30, and thus, cracks of the electrolyte layer 30, which are caused in a portion of the electrolyte layer 30 not in contact with the cathode 10 by a pressure difference during a pressing process, may be effectively suppressed or reduced. The inactive member 40 may be around or surround the side surfaces of the cathode 10 and may be separated from the anode 20, for example, may be separated from a first anode active material layer 22. The inactive member 40 may be around or surround the side surfaces of the cathode 10, may be in contact with the electrolyte layer 30, and may be separated from the anode 20. Therefore, the possibility of a short circuit occurring due to physical contact between the cathode 10 and the first anode active material layer 22 or the possibility of a short circuit occurring due to overcharging of lithium may be suppressed or reduced. For example, if (e.g., when) the inactive member 40 is arranged on a side surface (e.g., at least one side surface (e.g., one or both (e.g., opposite) side surfaces)) of the cathode active material layer 12 as well as a side surface (e.g., at least one side surface (e.g., one or both (e.g., opposite) side surfaces)) of the cathode current collector 11, the possibility of a short circuit caused by contact between the cathode current collector 11 and the anode 20 may be more effectively suppressed or reduced.

Referring to FIGS. 4 and 5, the inactive member 40 may extend from one side surface of the cathode 10 to an end portion of the electrolyte layer 30. The inactive member 40 may extend to the end portion of the electrolyte layer 30, and thus, cracks occurring in the end portion of the electrolyte layer 30 may be suppressed or reduced. The end portion of the electrolyte layer 30 may be an outermost portion in contact with a side surface of the electrolyte layer 30. The inactive member 40 may extend to the outermost portion in contact with the side surface of the electrolyte layer 30. The inactive member 40 may be separated from the anode 20, for example, may be separated from the first anode active material layer 22. The inactive member 40 may extend to the end portion of the electrolyte layer 30 but may not be in contact with the anode 20. The inactive member 40 may fill a space between one side surface of the cathode 10 and the end portion of the electrolyte layer 30.

Referring to FIGS. 4 and 5, a width of the inactive member 40 extending from one side surface of the cathode 10 to the end portion of the electrolyte layer 30 may be, for example, about 1 % to about 30 %, about 1 % to about 25 %, about 1 % to about 20 %, about 1 % to about 15 %, about 1 % to about 10 %, or about 1 % to about 5 % of a width of the cathode 10 between one side surface and the other side surface facing the one side surface. If (e.g., when) the width of the inactive member 40 is excessively large (e.g., is substantially large, or larger than the highest end of the ranges), the energy density of the all solid secondary battery 1 may decrease. If (e.g., when) the width of the inactive member 40 is excessively small, the effects of the inactive member 40 may be negligible.

An area of the cathode 10 may be smaller than an area of the electrolyte layer 30 in contact with the cathode 10. The inactive member 40 may be arranged to surround side surfaces of the cathode 10 to compensate for a difference in area between the cathode 10 and the electrolyte layer 30. An area of the inactive member 40 may compensate for the difference between the area of the cathode 10 and the area of the electrolyte layer 30, and thus, cracks of the electrolyte layer 30, which are caused by a pressure difference during a pressing process, may be effectively suppressed or reduced. For example, the sum of the area of the cathode 10 and the area of the inactive member 40 may be identical to the area of the electrolyte layer 30. The electrolyte layer 30 may be, for example, a solid electrolyte layer.

The area of the cathode 10 may be, for example, less than about 100 %, about 99 % or less, about 98 % or less, about 97 % or less, about 96 % or less, or about 95 % or less of the area of the electrolyte layer 30. The area of the cathode 10 may be, for example, about 50 % to less than 100 %, about 50 % to about 99 %, about 55 % to about 98 %, about 60 % to about 97 %, about 70 % to about 96 %, about 80 % to about 95 %, or about 85 % to about 95 % of the area of the electrolyte layer 30.

If (e.g., when) the area of the cathode 10 is identical to or greater than the area of the electrolyte layer 30, the possibility of a short circuit occurring due to physical contact between the cathode 10 and the first anode active material layer 22 or the possibility of a short circuit occurring due to overcharging of lithium may increase. The area of the cathode 10 may be, for example, identical to the area of the cathode active material layer 12. The area of the cathode 10 may be, for example, identical to the area of the cathode current collector 11.

The area of the inactive member 40 may be, for example, about 50 % or less, about 40 % or less, about 30 % or less, about 20 % or less, or about 10 % or less of the area of the cathode 10. The area of the inactive member 40 may be, for example, about 1 % to about 50 %, about 5 % to about 40 %, about 5 % to about 30 %, about 5 % to about 20 %, or about 5 % to about 15 % of the area of the cathode 10.

The area S1 of the cathode 10 may be smaller than an area S4 of the anode current collector 21. The area S1 of the cathode 10 may be, for example, less than about 100 %, about 99 % or less, about 98 % or less, about 97 % or less, about 96 % or less, or about 95 % or less of the area S4 of the anode current collector 21. The area S1 of the cathode 10 may be, for example, about 50 % to less than about 100 %, about 50 % to about 99 %, about 55 % to about 98 %, about 60 % to about 97 %, about 70 % to about 96 %, about 80 % to about 95 %, or about 85 % to about 95 % of the area S4 of the anode current collector 21. The area S4 of the anode current collector 21 may be, for example, identical to the area of the anode 20. The area S4 of the anode current collector 21 may be, for example, identical to the area of the first anode active material layer 22.

As utilized herein, the "same" area, length, width, thickness, and/or shape may include all cases having "substantially same" area, length, width, thickness, and/or shape except that the area, length, thickness, and/or shape are intentionally modified. The "same" area, length, width, and/or thickness may include, for example, a range of unintended differences less than about 3 %, less than about 2 %, less than about 1 %, less than about 0.5 %, or less than about 0.1 % in the area, length, width, and/or thickness between subjects to be compared.

A thickness of the inactive member 40 may be, for example, greater than a thickness of the first anode active material layer 22. The thickness of the first anode active material layer 22 may be, for example, about 50 % or less, about 40 % or less, about 30 % or less, about 20 % or less, or about 10 % or less of the thickness of the inactive member 40. The thickness of the first anode active material layer 22 may be, for example, about 1 % to about 50 %, about 1 % to about 40 %, about 1 % to about 30 %, about 1 % to about 20 %, or about 1 % to about 10 % of the thickness of the inactive member 40.

The inactive member 40 may be a gasket. By utilizing the gasket as the inactive member 40, cracks of the electrolyte layer 30 caused by a pressure difference during a pressing process may be effectively suppressed or reduced.

The inactive member 40 may have, for example, a single-layer structure. In some embodiments, the inactive member 40 may have a multi-layer structure. In the inactive member 40 having a multi-layer structure, each layer may have a different composition. The inactive member 40 having a multi-layer structure may have, for example, a two-layer structure, a three-layer structure, a four-layer structure, or a five-layer structure. The inactive member 40 having the multi-layer structure may include, for example, at least one adhesive layer and at least one support layer. The adhesive layer may effectively prevent or reduce separation of the cathode 10 from the electrolyte layer 30 caused by a volume change of the cathode 10 during a charging/discharging process of the all solid secondary battery 1 and may provide a binding force between the support layer and other layers, thereby improving the film strength of the inactive member 40. The support layer may provide a supporting force to the inactive member 40, may prevent or reduce substantially non-uniform application of pressure to the electrolyte layer 30 during a pressing process or a charging/discharging process, and may prevent or reduce deformation of the all solid secondary battery 1 to be manufactured.

The inactive member 40 may be, for example, a flame-retardant member. The flame-retardant inactive member may provide flame retardancy, and thus, the possibility of thermal runaway and ignition of the all solid secondary battery 1 may be prevented or reduced. As a result, the safety of the all solid secondary battery 1 may be further improved. The flame-retardant inactive member may be configured to absorb moisture remaining in the all solid secondary battery 1, and thus, deterioration of the all solid secondary battery 1 may be prevented or reduced, thereby improving the lifespan characteristics of the all solid secondary battery 1.

The flame-retardant inactive member may include, for example, a matrix and a filler. The matrix may include, for example, a substrate and a reinforcement. The matrix includes, for example, a fibrous substrate and a fibrous reinforcement. The matrix may include the substrate to have elasticity. Therefore, the matrix may effectively accommodate a volume change during charging/discharging of the all solid secondary battery 1 and may be arranged in one or more suitable positions. The substrate included in the matrix may include, for example, a first fibrous material. The substrate may include the first fibrous material, and thus, a volume change of the cathode 10 may be effectively accommodated during a charging/discharging process of the all solid secondary battery 1, and deformation of the inactive member 40 caused by the volume change of the cathode 10 may be effectively suppressed or reduced. The first fibrous material may be, for example, a material having an aspect ratio of about 5 or more, about 20 or more, or about 50 or more. The first fibrous material may be, for example, a material having an aspect ratio of about 5 to about 1000, about 20 to about 1000, or about 50 to about 1000. The first fibrous material may be, for example, an insulating material. The first fibrous material may be an insulating material, and thus, a short circuit between the cathode 10 and the anode 20, which is caused by lithium dendrite and/or the like formed during a charging/discharging process of the all solid secondary battery 1, may be effectively prevented or reduced. The first fibrous material may include, for example, at least one selected from among pulp fibers, insulating polymer fibers, and ion-conductive polymer fibers. The matrix may include the reinforcement, and thus, the strength of the matrix may increase. Therefore, the matrix may prevent or reduce an excessive volume change during charging/discharging of the all solid secondary battery 1 and may prevent or reduce deformation of the all solid secondary battery 1. The reinforcement included in the matrix may include, for example, a second fibrous material. The reinforcement may include the second fibrous material, and thus, the strength of the matrix may increase more uniformly. The second fibrous material may be, for example, a material having an aspect ratio of about 3 or more, about 5 or more, or about 10 or more. The first fibrous material may be, for example, a material having an aspect ratio of about 3 to about 100, about 5 to about 100, or about 10 to about 100. The second fibrous material may be, for example, a flame-retardant material. The second fibrous material may be a flame-retardant material, and thus, ignition due to thermal runaway occurring during a charging/discharging process of the all solid secondary battery 1 or due to an external impact may be effectively prevented or reduced. The second fibrous material may be, for example, glass fibers, metal oxide fibers, ceramic fibers, and/or the like.

The flame-retardant inactive member may include a filler in addition to the matrix. The filler may be arranged inside the matrix, on a surface of the matrix, or both (e.g., simultaneously) inside and on the surface of the matrix. The filler may be, for example, an inorganic material. The filler included in the flame-retardant inactive member may be, for example, a moisture getter. The filler may be configured to absorb moisture, for example, at a temperature below about 100 °C to remove moisture remaining in the all solid secondary battery 1, thereby preventing or reducing deterioration of the all solid secondary battery 1. In some embodiments, if (e.g., when) a temperature of the all solid secondary battery 1 increases to about 150 °C or more due to thermal runaway occurring during a charging/discharging process of the all solid secondary battery 1 or due to an external impact, the moisture getter may release the adsorbed moisture, thereby effectively suppressing ignition of the all solid secondary battery 1. For example, the filler may be a flame retardant. The filler may be, for example, a metal hydroxide having moisture absorbency. The metal hydroxide included in the filler may be, for example, Mg(OH)₂, Fe(OH)₃, Sb(OH)₃, Sn(OH)₄, TI(OH)₃, Zr(OH)₄, Al(OH)₃, or a combination thereof. An amount of the filler included in the flame-retardant inactive member may be, for example, about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight, based on about 100 parts by weight of the flame-retardant inactive member.

The flame-retardant inactive member may further include, for example, a binder. The binder may include, for example, a curable polymer or a non-curable polymer. The curable polymer may be a polymer cured by heat and/or pressure. The curable polymer may be, for example, a solid at room temperature. The flame-retardant inactive member may include, for example, a thermo-pressure curable film and/or a cured product thereof. The thermo-pressure curable polymer may be, for example, TSA-66 manufactured by Toray.

The flame-retardant inactive member may further include another material in addition to the above-described substrate, reinforcement, filler, and binder. The flame-retardant inactive member may further include, for example, at least one selected from among paper, an insulating polymer, an ion-conductive polymer, an insulating inorganic material, an oxide-based solid electrolyte, and a sulfide-based solid electrolyte. The insulating polymer may be, for example, an olefin-based polymer such as polypropylene (PP) and polyethylene (PE).

A density of the substrate or the reinforcement included in the flame-retardant inactive member may be, for example, about 10 % to about 300 %, about 10 % to about 150 %, about 10 % to about 140 %, about 10 % to about 130 %, or about 10 % to about 120 % of a density of the cathode active material included in the cathode active material layer 12.

The inactive member 40 may be a member that does not include an electrochemically active material, for example, an electrode active material. The electrode active material may be a material that allows intercalation/deintercalation of lithium. The inactive member 40 may be a member including a material available in the art other than an electrode active material.

### Anode

### Anode: Anode active material

Referring to FIGS. 1 to 5, the anode 20 may include: the anode current collector 21; and the first anode active material layer 22 arranged on a side surface (e.g., at least one side or surface (e.g., one or both (e.g., opposite) sides)) of the anode current collector 21.

The first anode active material layer 22 may be, for example, a metal layer, and the metal layer may include lithium or a lithium alloy.

In some embodiments, the first anode active material layer 22 may include, for example, an anode active material and a binder.

The anode active material included in the first anode active material layer 22 may be, for example, a material for anodes allowing formation of an alloy or compound with lithium.

The anode active material included in the first anode active material layer 22 may include, for example, particles (e.g., may be in the form of particles). An average particle diameter of the anode active material in the form of particles may be, for example, about 4 µm or less, about 3 µm or less, about 2 µm or less, about 1 µm or less, about 500 nm or less, about 300 nm or less, or about 100 nm or less. The average particle diameter of the anode active material in the form of particles may be, for example, about 10 nm to about 4 µm, about 10 nm to about 3 µm, about 10 nm to about 2 µm, about 10 nm to about 1 µm, about 10 nm to about 500 nm, about 10 nm to about 300 nm, or about 10 nm to about 100 nm. If (e.g., when) the average particle diameter of the anode active material is within the above ranges, reversible absorbing and/or desorbing of lithium may occur more easily during charging/discharging. The average particle diameter of the anode active material may be, for example, a median diameter D50 measured by utilizing a laser particle size analyzer.

The anode active material included in the first anode active material layer 22 may include, for example, at least one selected from among a carbon-based anode active material and a metal or metalloid anode active material.

The carbon-based anode active material may include, for example, amorphous carbon, crystalline carbon, porous carbon, or a combination thereof.

The carbon-based anode active material may be, for example, amorphous carbon. The amorphous carbon may be, for example, carbon black (CB), acetylene black (AB), furnace black (FB), Ketjen black (KB), graphene, and/or the like. However, embodiments are not limited thereto, and any material classified as amorphous carbon in the art may be utilized. The amorphous carbon may be carbon that has no crystallinity or very low crystallinity and may be distinguished from crystalline carbon or graphite-based carbon.

The carbon-based anode active material may be, for example, porous carbon. A pore volume of the porous carbon may be, for example, about 0.1 cc/g to about 10.0 cc/g, about 0.5 cc/g to about 5 cc/g, or about 0.1 cc/g to about 1 cc/g. An average pore diameter of the porous carbon may be, for example, about 1 nm to about 50 nm, about 1 nm to about 30 nm, or about 1 nm to about 10 nm. A BET specific surface area of the porous carbon may be, for example, about 100 m²/g to about 3,000 m²/g.

The metal or metalloid anode active material may include at least one selected from among gold (Au), platinum (Pt), palladium (Pd), silicon (Si), silver (Ag), aluminum (Al), bismuth (Bi), tin (Sn), and zinc (Zn). However, embodiments are not limited thereto, and any material available in the art as a metal or metalloid anode active material for forming an alloy or compound with lithium may be utilized. For example, nickel (Ni) may not form an alloy with lithium and thus may not be a metal anode active material.

The first anode active material layer 22 may include one type or kind of anode active material among the above-described anode active materials or a mixture of a plurality of different anode active materials. For example, the first anode active material layer 22 may include only amorphous carbon or may include at least one selected from among gold (Au), platinum (Pt), palladium (Pd), silicon (Si), silver (Ag), aluminum (Al), bismuth (Bi), tin (Sn), and zinc (Zn). In some embodiments, the first anode active material layer 22 may include a mixture of amorphous carbon and at least one selected from among gold (Au), platinum (Pt), palladium (Pd), silicon (Si), silver (Ag), aluminum (Al), bismuth (Bi), tin (Sn), and zinc (Zn). A mixing ratio of amorphous carbon to gold and/or the like in the mixture may be a weight ratio of, for example, about 99:1 to about 1:99, about 10:1 to about 1:2, about 5:1 to about 1:1, or about 4:1 to about 2:1. However, embodiments are not limited thereto, and the mixing ratio may be selected according to the required characteristics of the all solid secondary battery 1. The anode active material may have the above-described composition, and thus, the cycle characteristics of the all solid secondary battery 1 may be further improved.

The anode active material included in the first anode active material layer 22 may include, for example, a mixture of first particles including amorphous carbon and second particles including a metal or metalloid. The metal or metalloid may include, for example, gold (Au), platinum (Pt), palladium (Pd), silicon (Si), silver (Ag), aluminum (Al), bismuth (Bi), tin (Sn), zinc (Zn), and/or the like. In some embodiments, the metalloid may be a semiconductor. An amount of the second particles may be about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt%, based on the total weight of the mixture. If (e.g., when) the amount of the second particles is within the above ranges, the cycle characteristics of the all solid secondary battery 1 may be further improved.

In some embodiments, the first anode active material layer 22 may include a composite anode active material. The composite anode active material may include, for example, a carbon-based support and a metal-based anode active material supported on the carbon-based support. The composite anode active material may have the above-described structure, and thus, localization of the metal-based anode active material may be prevented or reduced in the first anode active material layer 22, and substantially uniform distribution thereof may be obtained. As a result, the cycle characteristics of the all solid secondary battery 1 including the first anode active material layer 22 may be further improved.

The metal-based anode active material supported on the carbon-based support may include, for example, a metal, a metal oxide, a composite of a metal and a metal oxide, or a combination thereof. The metal may include, for example, gold (Au), platinum (Pt), palladium (Pd), silicon (Si), silver (Ag), aluminum (Al), bismuth (Bi), tin (Sn), tellurium (Te), zinc (Zn), and/or the like. The metal oxide may include, for example, a gold (Au) oxide, a platinum (Pt) oxide, a palladium (Pd) oxide, a silicon (Si) oxide, a silver (Ag) oxide, an aluminum (Al) oxide, a bismuth (Bi) oxide, a tin (Sn) oxide, a tellurium (Te) oxide, a zinc (Zn) oxide, and/or the like. The metal oxide may include, for example, AuₓO_{y} (wherein 0<x≤2 and 0<y≤3), PtₓO_{y} (wherein 0<x≤1 and 0<y≤2), PdₓO_{y} (wherein 0<x≤1 and 0<y≤1), SiₓO_{y} (wherein 0<x≤1 and 0<y≤2), AgₓO_{y} (wherein 0<x≤2 and 0<y≤1), AlₓO_{y} (wherein 0<x≤2 and 0<y≤3), BiₓO_{y} (wherein 0<x≤2 and 0<y≤3), SnₓO_{y} (wherein 0<x≤1 and 0<y≤2), TeₓO_{y} (wherein 0<x≤1 and 0<y≤3), ZnₓO_{y} (wherein 0<x≤1 and 0<y≤1), or a combination thereof. The composite of the metal and the metal oxide may include, for example, a composite of Au and AuₓO_{y} (wherein 0<x≤2 and 0<y≤3), a composite of Pt and PtₓO_{y} (wherein 0<x≤1 and 0<y≤2), a composite of Pd and PdₓO_{y} (wherein 0<x≤1 and 0<y≤1), a composite of Si and SiₓO_{y} (wherein 0<x≤1 and 0<y≤2), a composite of Ag and AgₓO_{y} (wherein 0<x≤2 and 0<y≤1), a composite of Al and AlₓO_{y} (wherein 0<x≤2 and 0<y≤3), a composite of Bi and BiₓO_{y} (wherein 0<x≤2 and 0<y≤3), a composite of Sn and SnₓO_{y} (wherein 0<x≤1 and 0<y≤2), a composite of Te and TeₓO_{y} (wherein 0<x≤1 and 0<y≤3), a composite of Zn and ZnₓO_{y} (wherein 0<x≤1 and 0<y≤1), or a combination thereof.

The carbon-based support may include, for example, amorphous carbon. The amorphous carbon may be, for example, carbon black (CB), acetylene black (AB), furnace black (FB), Ketjen black (KB), graphene, activated carbon, carbon nanofibers (CNFs), carbon nanotubes (CNTs), and/or the like. However, embodiments are not limited thereto, and any material classified as amorphous carbon in the art may be utilized. The amorphous carbon may be carbon that has no crystallinity or very low crystallinity and may be distinguished from crystalline carbon or graphite-based carbon. A carbonaceous material may be, for example, a carbon-based anode active material.

The composite anode active material may include, for example, particles (e.g., may be in a form of particles). A particle diameter of the composite anode active material in the form of particles may be, for example, about 10 nm to about 4 µm, about 10 nm to about 1 µm, about 10 nm to about 500 nm, about 10 nm to about 200 nm, or about 10 nm to about 100 nm. If (e.g., when) the particle diameter of the composite anode active material is within the above ranges, reversible absorbing and/or desorbing of lithium may occur more easily during charging/discharging. The metal-based anode active material supported on the support may include, for example, particles (e.g., may be in a form of particles). A particle diameter of the metal-based anode active material may be, for example, about 1 nm to about 200 nm, about 1 nm to about 150 nm, about 5 nm to about 100 nm, or about 10 nm to about 50 nm. The carbon-based support may include, for example, particles (e.g., may be in a form of particles). A particle diameter of the carbon-based support may be, for example, about 10 nm to about 2 µm, about 10 nm to about 1 µm, about 10 nm to about 500 nm, about 10 nm to about 200 nm, or about 10 nm to about 100 nm. If (e.g., when) the particle diameter of the carbon-based support is within the above ranges, the carbon-based support may be more uniformly arranged in the first anode active material layer 22. The carbon-based support may include, for example, nanoparticles having a particle diameter of about 500 nm or less. The particle diameter of the composite anode active material, the particle diameter of the metal-based anode active material, and the particle diameter of the carbon-based support may each be, for example, an average particle diameter. The average particle diameter may be, for example, a median diameter D50 measured by utilizing a laser particle size analyzer. In some embodiments, the average particle diameter may be determined automatically by utilizing software, for example, from an electron microscope image or may be manually determined according to a manual.

### Anode: Binder

The binder included in the first anode active material layer 22 may be, for example, styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like. However, embodiments are not limited thereto, and any material available in the art as a binder may be utilized. The binder may be provided as a single binder or a plurality of different binders.

The first anode active material layer 22 may include the binder, and thus, the first anode active material layer 22 may be stabilized on the anode current collector 21. In some embodiments, cracks of the first anode active material layer 22 may be suppressed or reduced despite a volume change and/or a relative position change of the first anode active material layer 22 during a charging/discharging process. For example, if (e.g., when) the first anode active material layer 22 does not include a binder, the first anode active material layer 22 may easily be separated from the anode current collector 21. The first anode active material layer 22 may be separated from the anode current collector 21, and thus, an exposed region of the anode current collector 21 may be brought into contact with the electrolyte layer 30, thereby increasing the possibility of occurrence of a short circuit. The first anode active material layer 22 may be prepared by, for example, applying a slurry, in which a material constituting the first anode active material layer 22 is dispersed, to the anode current collector 21 and drying the slurry. By adding the binder to the first anode active material layer 22, the anode active material may be stably dispersed in the slurry. For example, if (e.g., when) the slurry is applied to the anode current collector 21 by screen printing, clogging of a screen (e.g., clogging by aggregates of the anode active material) may be suppressed or reduced.

### Anode: Other additives

The first anode active material layer 22 may further include additives utilized in an all solid secondary battery in the related art, for example, a filler, a coating agent, a dispersant, an ion-conductive adjuvant, and/or the like.

### Anode: Solid electrolyte

The first anode active material layer 22 may further include a solid electrolyte. The solid electrolyte may be, for example, a material selected from among the solid electrolytes included in the electrolyte layer 30. The solid electrolyte included in the first anode active material layer 22 may serve as a reaction site where formation of a lithium metal is initiated in the first anode active material layer 22, as a space for storing the formed lithium metal, or as a path for delivering lithium ions. The solid electrolyte may not be provided.

In the first anode active material layer 22, for example, the amount of the solid electrolyte may be higher in an area adjacent to the electrolyte layer 30 and may be lower in an area adjacent to the anode current collector 21. In the first anode active material layer 22, the solid electrolyte may have, for example, a concentration gradient such that the concentration decreases from an area adjacent to the electrolyte layer 30 to an area adjacent to the anode current collector 21.

### Anode: First anode active material layer

A ratio B/A of an initial charging capacity B of the first anode active material layer 22 to an initial charging capacity A of the cathode active material layer 12 may be about 0.005 to about 0.45. The initial charging capacity of the cathode active material layer 12 may be determined at a maximum charging voltage relative to Li/Li⁺ from a 1^{st} open circuit voltage. The initial charging capacity of the first anode active material layer 22 may be determined at about 0.01 V relative to Li/Li⁺ from a 2^{nd} open circuit voltage.

The maximum charging voltage may be determined by the type or kind of the cathode active material. The maximum charging voltage may be, for example, about 1.5 V, about 2.0 V, about 2.5 V, about 3.0 V, about 3.5 V, about 4.0 V, about 4.2 V, or about 4.3 V. For example, the maximum charging voltage of Li₂S or the Li₂S composite may be about 2.5 V or about 3.0 V relative to Li/Li⁺. A ratio B/A of the initial charging capacity B of the first anode active material layer 22 to the initial charging capacity A of the cathode active material layer 12 may be, for example, about 0.01 to about 0.3, about 0.01 to about 0.2, or about 0.05 to about 0.1. The initial charging capacity (mAh) of the cathode active material layer 12 may be obtained by multiplying a charge specific capacity (mAh/g) of the cathode active material by a mass (g) of the cathode active material in the cathode active material layer 12. If (e.g., when) one or more suitable types (kinds) of cathode active materials are utilized, a value of charge specific capacity×mass may be calculated for each cathode active material, and the sum of the values may be the initial charging capacity of the cathode active material layer 12. The initial charging capacity of the first anode active material layer 22 may be calculated in substantially the same manner. The initial charging capacity of the first anode active material layer 22 may be obtained by multiplying a charge specific capacity (mAh/g) of the anode active material by a mass of the anode active material in the first anode active material layer 22. If (e.g., when) one or more suitable types (kinds) of anode active materials are utilized, a value of charge specific capacity×mass may be calculated for each anode active material, and the sum of the values may be the initial charging capacity of the first anode active material layer 22. The charge specific capacity of each of the cathode active material and the anode active material may be measured by utilizing a solid half-cell that uses a lithium metal as a counter electrode. The initial charging capacity of each of the cathode active material layer 12 and the first anode active material layer 22 may be directly measured at a constant current density, for example, about 0.1 mA/cm², by utilizing a solid half-cell. The measurement may be performed on the cathode with an operating voltage from the 1^{st} open circuit voltage (OCV) to the maximum charging voltage, for example, about 3.0 V (vs. Li/Li⁺). The measurement may be performed on the anode, for example, a lithium metal, with an operating voltage from the 2^{nd} open circuit voltage (OCV) to about 0.01 V. For example, a solid half-cell including the cathode active material layer 12 may be charged at a constant current of about 0.1 mA/cm² from the 1^{st} open circuit voltage to about 3.0 V, and a solid half-cell including the first anode active material layer 22 may be charged at a constant current of about 0.1 mA/cm² from the 2^{nd} open circuit voltage to about 0.01 V. A current density during the charging at the constant current may be, for example, about 0.2 mA/cm² or about 0.5 mA/cm². The solid half-cell including the cathode active material layer 12 may be charged, for example, from the 1^{st} open circuit voltage to about 2.5 V, about 2.0 V, about 3.5 V, or about 4.0 V. The maximum charging voltage of the cathode active material may be determined by a maximum voltage of a battery satisfying safety conditions according to JISC8712:2015 of the Japanese Standards Association, the entire content of which is herein incorporated by reference.

If (e.g., when) the initial charging capacity of the first anode active material layer 22 is excessively low (e.g., substantially low or lower than the lowest end of the ranges), the first anode active material layer 22 may become very thin, and thus, during a repeated charging/discharging process, lithium dendrites formed between the first anode active material layer 22 and the anode current collector 21 may collapse the first anode active material layer 22, making it difficult to improve the cycle characteristics of the all solid secondary battery 1. If (e.g., when) the charging capacity of the first anode active material layer 22 excessively increases (e.g., substantially high or higher than the highest end of the ranges), the energy density of the all solid secondary battery 1 may decrease, and the internal resistance of the all solid secondary battery 1 due to the first anode active material layer 22 may increase, making it difficult to improve the cycle characteristics of the all solid secondary battery 1.

A thickness of the first anode active material layer 22 may be, for example, about 50 % or less, about 40 % or less, about 30 % or less, about 20 % or less, about 10 % or less, or about 5 % or less of a thickness of the cathode active material layer 12. The thickness of the first anode active material layer 22 may be, for example, about 1 % to about 50 %, about 1 % to about 40 %, about 1 % to about 30 %, about 1 % to about 20 %, about 1 % to about 10 %, or about 1 % to about 5 % of the thickness of the cathode active material layer 12. The thickness of the first anode active material layer 22 may be, for example, about 1 µm to about 20 µm, about 2 µm to about 15 µm, or about 3 µm to about 10 µm. If (e.g., when) the thickness of the first anode active material layer 22 is excessively small, lithium dendrites formed between the first anode active material layer 22 and the anode current collector 21 may collapse the first anode active material layer 22, making it difficult to improve the cycle characteristics of the all solid secondary battery 1. If (e.g., when) the thickness of the first anode active material layer 22 excessively increases (e.g., substantially high or higher than the highest end of the ranges), the energy density of the all solid secondary battery 1 may decrease, and the internal resistance of the all solid secondary battery 1 due to the first anode active material layer 22 may increase, making it difficult to improve the cycle characteristics of the all solid secondary battery 1. If (e.g., when) the thickness of the first anode active material layer 22 decreases, for example, the initial charging capacity of the first anode active material layer 22 may also decrease.

### Anode: Second anode active material layer

Referring to FIG. 3, the all solid secondary battery 1 may further include, for example, a second anode active material layer 24 arranged between the anode current collector 21 and the first anode active material layer 22 after charging. The second anode active material layer 24 may be a metal layer including lithium or a lithium alloy. The metal layer may include lithium or a lithium alloy. Therefore, the second anode active material layer 24, as a metal layer including lithium, may serve as a lithium reservoir. The lithium alloy may be, for example, a Li-Al alloy, a Li-Sn alloy, a Li-In alloy, a Li-Ag alloy, a Li-Au alloy, a Li-Zn alloy, a Li-Ge alloy, a Li-Si alloy, and/or the like. However, embodiments are not limited thereto, and any material available in the art as a lithium alloy may be utilized. The second anode active material layer 24 may include one of the above-described alloys or lithium or may include one or more suitable types (kinds) of alloys. The second anode active material layer 24 may be, for example, a plated layer. For example, the second anode active material layer 24 may be plated between the first anode active material layer 22 and the anode current collector 21 during a charging/discharging process of the all solid secondary battery 1.

A thickness of the second anode active material layer 24 is not limited, but may be, for example, about 1 µm to about 500 µm, about 1 µm to about 200 µm, about 1 µm to about 150 µm, about 1 µm to about 100 µm, or about 1 µm to about 50 µm. If (e.g., when) the thickness of the second anode active material layer 24 is excessively small, it may be difficult for the second anode active material layer 24 to function as a lithium reservoir. If (e.g., when) the thickness of the second anode active material layer 24 is excessively large (e.g., is substantially large, or larger than the highest end of the ranges), the mass and volume of the all solid secondary battery 1 may increase, and the cycle characteristics of the all solid secondary battery 1 may actually deteriorate.

In some embodiments, in the all solid secondary battery 1, for example, the second anode active material layer 24 may be arranged between the anode current collector 21 and the first anode active material layer 22 before assembling the all solid secondary battery 1. If (e.g., when) the second anode active material layer 24 is arranged between the anode current collector 21 and the first anode active material layer 22 before assembling the all solid secondary battery 1, the second anode active material layer 24, as a metal layer including lithium, may serve as a lithium reservoir. For example, before assembling the all solid secondary battery 1, a lithium foil may be arranged between the anode current collector 21 and the first anode active material layer 22.

If (e.g., when) the second anode active material layer 24 is plated by charging after assembling the all solid secondary battery 1, the second anode active material layer 24 may not be included while the all solid secondary battery 1 is assembled, and thus, the energy density of the all solid secondary battery 1 may increase. During charging of the all solid secondary battery 1, the first anode active material layer 22 may be charged to exceed the charging capacity thereof. For example, the first anode active material layer 22 may be overcharged. During initial charging, lithium may be absorbed to the first anode active material layer 22. The anode active material included in the first anode active material layer 22 may form an alloy or compound with lithium ions that have migrated from the cathode 10. If (e.g., when) the first anode active material layer 22 is charged to exceed the capacity thereof, lithium may be plated on a rear surface of the first anode active material layer 22, that is, between the anode current collector 21 and the first anode active material layer 22, and a metal layer corresponding to the second anode active material layer 24 may be formed by the plated lithium. The second anode active material layer 24 may be a metal layer mainly composed of lithium (i.e., a lithium metal). These results may be obtained because the anode active material included in the first anode active material layer 22 includes a material forming an alloy or compound with lithium. During discharging, lithium of the first anode active material layer 22 and the second anode active material layer 24, that is, the metal layer, may be ionized to migrate in a direction toward the cathode 10. Therefore, lithium may be utilized as an anode active material in the all solid secondary battery 1. In some embodiments, the second anode active material layer 24 may be coated with the first anode active material layer 22, and thus, the first anode active material layer 22 may serve as a protective layer for the second anode active material layer 24, that is, the metal layer, and may concurrently (e.g., simultaneously) serve to suppress or reduce precipitation growth of lithium dendrites. Therefore, a short circuit and capacity reduction in the all solid secondary battery 1 may be suppressed or reduced, thereby improving the cycle characteristics of the all solid secondary battery 1. In some embodiments, if (e.g., when) the second anode active material layer 24 is arranged by charging after assembling the all solid secondary battery 1, the anode 20, that is, the anode current collector 21, the first anode active material layer 22, and a region therebetween, may be Li-free regions that do not include lithium (Li) in an initial state of the all solid secondary battery 1 or in a state after full discharging thereof.

### Anode: Anode current collector

The anode current collector 21 may include, for example, a material that does not react with lithium, that is, a material that does not form an alloy and compound with lithium. The material constituting the anode current collector 21 may be, for example, copper (Cu), stainless steel, titanium (Ti), iron (Fe), cobalt (Co), nickel (Ni), and/or the like. However, embodiments are not limited thereto, and any material available in the art as an electrode current collector may be utilized. The anode current collector 21 may include one of the above-described metals, an alloy of two or more metals, or a coating material. The anode current collector 21 may be, for example, in the form of a plate or foil.

Referring to FIG. 3, the all solid secondary battery 1 may further include a thin film 23 including an element capable of forming an alloy with lithium on a side surface (e.g., at least one side (e.g., one or both (e.g., opposite) sides)) of the anode current collector 21. The thin film 23 may be arranged between the anode current collector 21 and the first anode active material layer 22. The thin film 23 may include, for example, an element capable of forming an alloy with lithium. The element capable of forming an alloy with lithium may be, for example, gold, silver, zinc, tin, indium, silicon, aluminum, bismuth, and/or the like. However, embodiments are not limited thereto, and any element capable of forming an alloy with lithium in the art may be utilized. The thin film 23 may include one of such metals or may include an alloy of one or more suitable types (kinds) of metals. The thin film may 23 may be arranged on a side surface (e.g., at least one side (e.g., one or both (e.g., opposite) sides)) of the anode current collector 21, and thus, for example, a plated form of the second anode active material layer 24 plated between the thin film 23 and the first anode active material layer 22 may be further planarized, and the cycle characteristics of the all solid secondary battery 1 may be further improved.

A thickness of the thin film 23 may be, for example, about 1 nm to about 800 nm, about 10 nm to about 700 nm, about 50 nm to about 600 nm, or about 100 nm to about 500 nm. If (e.g., when) the thickness of the thin film 23 is less than about 1 nm, it may be difficult for the thin film 23 to function. If (e.g., when) the thickness of the thin film 23 is excessively large or thick (e.g., is substantially thick, or thicker than the highest end of the ranges), the thin film 23 itself may be configured to absorb lithium so that an amount of plated lithium in the anode 20 may decrease, and thus, the energy density of the all solid secondary battery 1 may decrease, and the cycle characteristics of the all solid secondary battery 1 may deteriorate. The thin film 23 may be formed on the anode current collector 21 by, for example, vacuum deposition, sputtering, plating, and/or the like. However, embodiments are not limited to these methods, and any method capable of forming a thin film 23 in the art may be utilized.

In some embodiments, the anode current collector 21 may include, for example, a base film and a metal layer arranged on one or both (e.g., opposite) sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. The base film may include an insulating thermoplastic polymer, and thus, the base film may soften or liquefy in the event of a short circuit to stop operation of the battery, thereby suppressing a rapid increase in current. The metal layer may include, for example, copper (Cu), stainless steel, titanium (Ti), iron (Fe), cobalt (Co), nickel (Ni), or an alloy thereof. The anode current collector 21 may further include a metal chip and/or a lead tab. For detailed descriptions of the base film, the metal layer, the metal chip, and the lead tab of the anode current collector 21, the above-described cathode current collector 11 may be referred to. The anode current collector 21 may have the above-described structure, and thus, the weight of the anode 20 may be reduced, thereby improving the energy density of the anode 20 and a lithium battery.

### Solid electrolyte layer

### Solid electrolyte layer: Electrolyte

Referring to FIGS. 1 to 5, the solid electrolyte layer 30 may be arranged between the cathode 10 and the anode 20. The solid electrolyte layer 30 may further include, for example, a solid electrolyte, a gel electrolyte, or a combination thereof.

The solid electrolyte included in the solid electrolyte layer 30 may be a sulfide-based solid electrolyte.

The sulfide-based solid electrolyte may include at least one selected from among Li₂S-P₂S₅, Li₂S-P₂S₅-LiX (wherein X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are positive numbers and Z is one of Ge, Zn, and Ga), Li₂S-GeS₂, Li₂S-SiS₂-Li₃PO₄, Li₂S-SiS₂-LiₚMO_{q} (wherein p and q are positive numbers and M is one of P, Si, Ge, B, Al, Ga, and In), Li₇₋ₓPS₆₋ₓClₓ (wherein 0≤x≤2), Li₇₋ₓPS₆₋ₓBrₓ (wherein 0≤x≤2), and Li₇₋ₓPS₆₋ₓIₓ (wherein 0≤x≤2). In some embodiments, the sulfide-based solid electrolyte may include an argyrodite-type or kind (e.g., argyrodite) solid electrolyte, and the argyrodite-type or kind (e.g., argyrodite) solid electrolyte may include at least one selected from among Li₆PS₅Cl, Li₆PS₅Br, and Li₆PS₅I. In some embodiments, a density of the argyrodite-type or kind solid electrolyte may be about 1.5 g/cc to about 2.0 g/cc, the sulfide-based solid electrolyte may include particles (e.g., be in the form of particles), and an average particle diameter D50 of the particles may be about 0.1 µm to about 1.9 µm.

The sulfide-based solid electrolyte may include, for example, an argyrodite-type or kind (e.g., argyrodite) solid electrolyte represented by Formula 1 :

Formula 1 Li⁺₁₂₋ₙ₋ₓAⁿ⁺X²⁻₆₋ₓY⁻ₓ

wherein, in the formula above, A is P, As, Ge, Ga, Sb, Si, Sn, Al, In, Ti, V, Nb or Ta, X is S, Se or Te, Y is Cl, Br, I, F, CN, OCN, SCN, or N₃, 1≤n≤5, and 0≤x≤2. The sulfide-based solid electrolyte may be, for example, an argyrodite-type or kind (e.g., argyrodite) compound including at least one selected from among Li₇₋ₓPS₆₋ₓClₓ (wherein 0≤x≤2), Li₇₋ₓPS₆₋ₓBrₓ (wherein 0≤x≤2), and Li₇₋ₓPS₆₋ₓIₓ (wherein 0≤x≤2). The sulfide-based solid electrolyte may be, for example, an argyrodite-type or kind (e.g., argyrodite) compound including at least one selected from among Li₆PS₅Cl, Li₆PS₅Br, and Li₆PS₅I.

A density of the argyrodite-type or kind solid electrolyte may be in a range of about 1.5 g/cc to about 2.0 g/cc. If (e.g., when) the argyrodite-type or kind (e.g., argyrodite) solid electrolyte has a density of about 1.5 g/cc or more, the internal resistance of the all solid secondary battery 1 may be reduced, and penetration of the solid electrolyte layer 30 by Li may be effectively suppressed or reduced.

The solid electrolyte additionally included in the solid electrolyte layer 30 may include, for example, an oxide-based solid electrolyte, a polymer solid electrolyte, or a combination thereof.

The oxide-based solid electrolyte may be, for example, Li_{1+x+y}AlₓTi₂₋ₓSi_{y}P_{3-y}O₁₂ (wherein 0<x<2 and 0≤y<3), BaTiO₃, Pb(Zr,Ti)O₃ (PZT), Pb₁₋ₓLaₓZr_{1-y}Ti_{y}O₃ (PLZT, where 0≤x<1 and 0≤y<1 ), PB(Mg₃Nb_{2/3})O₃-PbTiO₃ (PMN-PT), HfO₂, SrTiOs, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (wherein 0<x<2 and 0<y<3), LiₓAl_{y}Ti_{z}(PO₄)₃ (wherein 0<x<2, 0<y<1, and 0<z<3), Li_{1+x+y}(Al, Ga)ₓ(Ti, Ge)₂₋ₓSi_{y}P_{3-y}O₁₂ (wherein 0≤x≤1 and 0≤y≤1), LiₓLa_{y}TiO₃ (wherein 0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (wherein M = Te, Nb, or Zr, and 0≤x≤10), or a combination thereof. The oxide-based solid electrolyte may be prepared, for example, by sintering and/or the like.

The oxide-based solid electrolyte may be, for example, a garnet-type or kind (e.g., garnet) solid electrolyte selected from among Li₇La₃Zr₂O₁₂ (LLZO) and Li₃₊ₓLa₃Zr₂₋ₐMₐO₁₂ (M doped LLZO, where M=Ga, W, Nb, Ta, or Al, 0<a<2, and 0≤x≤10).

The polymer solid electrolyte may include, for example, a mixture of a lithium salt and a polymer or may include a polymer having an ion-conductive functional group. The polymer solid electrolyte may be, for example, a polymer electrolyte in a solid state at about 25 °C and about 1 atm. The polymer solid electrolyte may not include (e.g., may exclude) a liquid. The polymer solid electrolyte may include a polymer, and the polymer may be, for example, polyethylene oxide (PEO), polyvinylidene fluoride (PVDF), vinylidene fluoride-hexafluoropropylene (PVDF-HFP) copolymer, a poly(styrene-b-ethylene oxide) block or reduce copolymer (PS-PEO), poly(styrene-butadiene), poly(styrene-isoprene-styrene), a poly(styrene-b-divinylbenzene) block or reduce copolymer, a poly(styrene-ethylene oxide-styrene) block or reduce copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi⁺), or a combination thereof. However, embodiments are not limited thereto, and any material available in the art as a polymer electrolyte may be utilized. The lithium salt may be any lithium salt available in the art. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (wherein x and y are each from 1 to 20), LiCl, Lil, or a mixture thereof. The polymer included in the polymer solid electrolyte may be, for example, a compound including 10 or more, 20 or more, 50 or more, or 100 or more repeating units. The polymer included in the polymer solid electrolyte may have a weight average molecular weight of, for example, 1000 Dalton (Da) or more, about 10,000 Da or more, about 100,000 Da or more, or about 1,000,000 Da or more. Here, a weight average molecular weight is measured by a gel permeation chromatography (GPC).

The gel electrolyte may be, for example, a polymer gel electrolyte. The gel electrolyte may have, for example, a gel state without including a polymer.

The polymer gel electrolyte may include, for example, a liquid electrolyte and a polymer or may include an organic solvent and a polymer having an ion-conductive functional group. The polymer gel electrolyte may be, for example, a polymer electrolyte in a gel state at about 25 °C and about 1 atm. The polymer gel electrolyte may have, for example, a gel state without including a liquid. The liquid electrolyte utilized in the polymer gel electrolyte may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer utilized in the polymer gel electrolyte may be selected from among polymers utilized in the polymer solid electrolyte. The organic solvent may be selected from among organic solvents utilized in the liquid electrolyte. The lithium salt may be selected from lithium salts utilized in the polymer solid electrolyte. The ionic liquid refers to a salt in a liquid state at room temperature or a room temperature molten salt that has a melting point below room temperature and includes only ions. The ionic liquid may include, for example, at least one selected from among compounds including: a) at least one cation selected from among an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and a mixture thereof; and b) at least one anion selected from among BF₄-, PF₆-, AsF₆-, SbF₆-, AlCl₄-, HSO₄-, ClO₄-, CH₃SO₃-, CF₃CO₂-, Cl-, Br-, I-, BF₄-, SO₄-, CF₃SO₃-, (FSO₂)₂N-, (C₂F₅SO₂)₂N-, (C₂F₅SO₂)(CF₃SO₂)N-, and (CF₃SO₂)₂N-. The polymer solid electrolyte may be impregnated with a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. The polymer included in the polymer gel electrolyte may have a weight average molecular weight of, for example, about 500 Da or more, about 1,000 Da or more, about 10,000 Da or more, about 100,000 Da or more, or about 1,000,000 Da or more.

### Method of preparing all solid secondary battery

A method of preparing a cathode according to embodiments may include: providing Li₂S or a Li₂S composite; providing a sulfide-based solid electrolyte; mixing the Li₂S composite, a gamma sulfur-carbon nanofiber composite, and the sulfide-based solid electrolyte to prepare a mixture; and applying and drying the mixture on a cathode current collector.

The gamma sulfur-carbon nanofiber composite may be obtained according to a preparation method disclosed in US Patent Publication No. 2020/0313188, the entire of which is herein incorporated by reference. For example, monoclinic gamma sulfur (γ-S), which is stable at a temperature equal to or below 80 °C, may be deposited via vapor deposition onto a substrate including a porous material in a sealed vapor deposition apparatus at a temperature sufficient to vaporize sulfur and for a time sufficient to provide the monoclinic gamma sulfur, and the monoclinic gamma sulfur deposited on the substrate may be cooled to a temperature of about 0 °C to about 50 °C.

As the Li₂S composite, a composite of Li₂S and a lithium salt or a composite of Li₂S, a lithium salt, and a carbon-based material may be provided. The composite of Li₂S and the lithium salt may be prepared by mechanically milling Li₂S and the lithium salt. Milling conditions are not limited, and any conditions allowing formation of the composite of Li₂S and the lithium salt may be utilized. The composite of Li₂S and the lithium salt may be prepared by adding Li₂S particles and the lithium salt to a ball mill and stirring the mixture at a rate of about 100 rpm to about 1,000 rpm for about 1 hour to about 20 hours. The stirring may be performed once or more.

As the lithium salt, for example, Lil, LiBr, LiCI, LiF, LiH, Li₂O, Li₂Se, Li₂Te, Li₃N, Li₃P, Li₃As, Li₃Sb, Li₃Al₂, LiB₃, Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof may be utilized.

The composite of Li₂S, the lithium salt, and the carbon-based material may be prepared, for example, by mechanically milling Li₂S and the lithium salt; and adding the carbon-based material to the milled product, followed by milling.

A sulfide-based solid electrolyte may be provided. The Li₂S-lithium salt composite may be mixed with the sulfide-based solid electrolyte to prepare a mixture.

A mixing ratio of the Li₂S composite to the sulfide-based solid electrolyte may be, for example, a weight ratio of about 50:50 to about 95:5, about 50:50 to about 90:10, about 50:50 to about 80:20, or about 50:50 to about 70:30.

The mixture may include a processing solvent. By additionally including the processing solvent, the mixture may have a slurry form. The solvent may be, for example, octyl acetate. However, embodiments are not limited thereto, and any material available in the art as a solvent may be utilized. In some embodiments, the mixture may be prepared by a dry method without including the processing solvent.

Mechanical milling may be utilized during the milling. A ball mill and/or the like may be utilized during the mechanical milling.

After arranging a solid electrolyte layer between a cathode and an anode, a battery assembly may be obtained and pressed.

The pressing may be performed by, for example, roll pressing, flat pressing, and/or the like. However, embodiments are not limited to these methods, and any pressing method available in the art may be utilized. The pressing may not be provided.

The pressing may be performed, for example, at a temperature in a range of room temperature (about 20 °C to about 25 °C) to about 90 °C. In some embodiments, the pressing may be performed at a high temperature of about 100 °C or higher. A pressing time may be, for example, about 30 minutes or less, about 20 minutes or less, about 15 minutes or less, or about 10 minutes or less. The pressing time may be about 1 ms to about 30 minutes, about 1 ms to about 20 minutes, about 1 ms to about 15 minutes, or about 1 ms to about 10 minutes. A pressing method may be, for example, isotactic pressing, roll pressing, flat pressing, and/or the like. However, embodiments are not limited to these methods, and any pressing method available in the art may be utilized. A pressure applied during the pressing may be, for example, about 500 MPa or less, for example, about 400 MPa or less, about 300 MPa or less, about 200 MPa or less, or about 100 MPa or less. The pressure applied during the pressing may be, for example, about 50 Mpa to about 500 Mpa, about 50 Mpa to about 400 Mpa, about 50 Mpa to about 300 Mpa, about 50 Mpa to about 200 Mpa, or about 50 Mpa to about 100 Mpa. By such pressing, for example, solid electrolyte powder may be sintered to form a single solid electrolyte.

The pressing may be performed by plate pressing at a temperature of about 40 °C to about 100 °C, for example, about 85 °C, and at a pressure of about 500 MPa for about 30 minutes. By such pressing, the solid electrolyte layer may be sintered to improve battery characteristics.

In some embodiments, the above-described pressing process may not be provided.

The present disclosure will be described in more detail through the following Examples and Comparative Examples. However, it will be understood that the examples are provided only to illustrate the present disclosure and not to be construed as limiting the scope of the present disclosure.

### Preparation of composite of Li₂S and lithium salt

### Preparation Example 1: Li₂S-LiI composite

Li₂S and LiI were mixed at a weight ratio of about 30:20. The mixture was mechanically milled by utilizing a ball mill to prepare a Li₂S-LiI composite. Milling conditions were about 25 °C, about 600 rpm, and about 10 hours.

A size of the Li₂S-LiI composite was less than about 1 µm. The size of the Li₂S-LiI composite was calculated by a software program from an SEM image of powder of the Li₂S-LiI composite. The size of the Li₂S-LiI composite was a D50 average particle diameter.

A Mohs hardness of Li₂S was about 0.6, and a Mohs hardness of LiI was about 2.0. A Mohs hardness of the Li₂S-LiI composite was less than about 2.

Comparative Preparation Example 1: Simple mixture of Li₂S and LiI

The mixture of Li₂S and LiI at a weight ratio of about 30:20 was utilized as is.

### Preparation of Li2S-Lil-CNF cathode active material

### Preparation Example 2: Li2S-Lil-CNF

Li₂S and LiI were mixed at a weight ratio of about 30:20. The mixture was mechanically milled by utilizing a ball mill to prepare a Li₂S-LiI composite. Milling conditions were about 25 °C, about 510 rpm, and about 10 hours.

The Li₂S-LiI composite and carbon nanofibers (CNFs) were mixed at a weight ratio of about 50:10. The mixture was mechanically milled by utilizing a ball mill to prepare a Li₂S-LiI-CNF composite. Milling conditions were about 25 °C, about 510 rpm, and about 10 hours.

The Li₂S-LiI-CNF composite was utilized as a composite cathode active material.

### Preparation Example 3: Preparation of gamma sulfur-carbon nanofiber (γ-S-CNFs) composite

According to a preparation method disclosed in US Patent Publication No. 2020/0313188, a gamma sulfur-CNF composite, in which monoclinic gamma sulfur was arranged on carbon nanofibers (CNFs), was prepared in the form of free-standing carbon nanofibers.

A free-standing CNF mat was punched by utilizing a stainless steel die (ø = about 11 mm), and CNF disks were weighed, placed in a self-developed autoclave (stainless steel 316), and then dried by exposure to about 180 °C for about 24 hours in an oven. The autoclave included a sulfur reservoir at the bottom and a perforated disk for placing electrodes at the top. After about 24 hours, the autoclave was slowly cooled to room temperature (about 25 °C) in a span of about 6 hours to about 8 hours. Electrodes obtained through this process were weighed and transferred to an argon-filled glove box via overnight vacuum drying at room temperature in an antechamber, for battery preparation.

### Preparation of cathode and secondary battery

### Example 1: (Li₂S-LiI-CNF composite) + γ-S-CNFs + solid electrolyte + binder (about 60:20:19:1.0)

### Preparation of Cathode

The Li₂S-LiI-CNF composite prepared in Preparation Example 2 was prepared as a cathode active material. Li₆PS₅Cl (D50=3.0 µm, crystalline), which was an argyrodite-type or kind (e.g., argyrodite) crystal, was prepared as a solid electrolyte. PVDF-HFP was prepared as a binder, and γ-S-CNFs obtained according to Preparation Example 3 was utilized in preparing a cathode mixture. These materials were mixed at a weight ratio of cathode active material: γ-S-CNFs:solid electrolyte:binder = about 60 : 20 : 19 : 1 (e.g., 1.0), and octyl acetate was added thereto to prepare a composition.

The composition was applied onto one side of a cathode current collector including an aluminum foil, of which one side (of the aluminum foil) was coated with carbon, and dried at about 80 °C for about 10 minutes to prepare a cathode.
A thickness of the cathode was about 120 µm, and a loading level of the cathode mixture was about 8 mg/cm². A thickness of the cathode active material layer was about 100 µm, and a thickness of the carbon-coated aluminum foil was about 20 µm. An area of the cathode active material layer was identical to an area of the cathode current collector.

### Preparation of anode

An SUS (stainless steel) foil having a thickness of about 10 µm was prepared as an anode current collector. Carbon black (CB) particles with a primary particle diameter of about 30 nm and silver (Ag) particles with an average particle diameter of about 60 nm were prepared as anode active materials.

About 4 g of mixed powder obtained by mixing the carbon black (CB) particles and the silver (Ag) particles at a weight ratio of about 3:1 was placed in a container, and about 4 g of an N-methyl-2-pyrrolidone (NMP) solution including about 7 wt% of a PVDF binder (# 9300 manufactured by Kureha Corporation) was added thereto to prepare a mixed solution. NMP was gradually added to the prepared mixed solution while stirring the mixed solution to prepare a slurry. The prepared slurry was applied to an SUS sheet by utilizing a bar coater, dried in air at about 80 °C for about 10 minutes, and then vacuum-dried at about 40 °C for about 10 hours to prepare a stack. The prepared stack was cold-roll-pressed to planarize a surface thereof to prepare an anode having a first anode active material layer/anode current collector structure. A thickness of the first anode active material layer was about 15 µm. An area of the first anode active material layer was identical to an area of the anode current collector.

### Preparation of solid electrolyte layer

To a LisPSsCI solid electrolyte (D₅₀=about 3.0 µm, crystalline), which was an argyrodite-type or kind (e.g., argyrodite) crystal, about 1.5 parts by weight of an acrylic binder was added with respect to about 98.5 parts by weight of the solid electrolyte to prepare a mixture. Octyl acetate was added to the prepared mixture while stirring to prepare a slurry. The prepared slurry was applied to an about 15 µm-thick non-woven fabric placed on an about 75 µm-thick PET substrate by utilizing a bar coater and dried in air at about 80 °C for about 10 minutes to prepare a stack. The prepared stack was vacuum-dried at about 80 °C for about 2 hours to prepare a solid electrolyte layer.

### Inactive member

A slurry obtained by mixing pulp fibers (cellulose fibers), glass fibers, aluminum hydroxide (Al(OH)₃), an acrylic binder, and a solvent was molded into a gasket form, and the solvent was removed therefrom to prepare a flame-retardant inactive member.

A weight ratio of the pulp fibers (cellulose fibers), the glass fibers, aluminum hydroxide (Al(OH)₃), and the acrylic binder was about 20:8:70:2. A thickness of the inactive member was about 120 µm.

Before arranging the prepared flame-retardant inactive member on the solid electrolyte layer, vacuum heat treatment was performed at a temperature of about 80 °C for about 5 hours to remove moisture and/or the like from the flame-retardant inactive member.

### Preparation of all solid secondary battery

The solid electrolyte layer was arranged on the anode, and the cathode was arranged on the solid electrolyte layer. A gasket was arranged around the cathode to surround the cathode and to be in contact with the solid electrolyte layer to prepare a stack. A thickness of the gasket was about 120 µm. The flame-retardant inactive member was utilized as the gasket. The gasket was arranged to be in contact with side surfaces of the cathode and the solid electrolyte layer. The cathode was arranged at a central portion of the solid electrolyte layer, and the gasket was arranged to surround the cathode and extend to an end portion of the solid electrolyte layer. An area of the cathode was about 90 % of an area of the solid electrolyte layer, and the gasket was arranged over the entire area of the remaining about 10 % area of the solid electrolyte layer on which the cathode was not arranged.

The prepared stack was plate-pressed at a temperature of about 85 °C and a pressure of about 500 MPa for about 30 minutes. By such pressing, the solid electrolyte layer was sintered to improve battery characteristics. A thickness of the sintered solid electrolyte layer was about 45 µm. A density of the LisPSsCI solid electrolyte, which was an argyrodite-type or kind (e.g., argyrodite) crystal included in the sintered solid electrolyte layer, was about 1.6 g/cc. An area of the solid electrolyte layer was identical to an area of the anode.

The pressed stack was placed in a pouch and vacuum-sealed to prepare an all solid secondary battery. Portions of the cathode current collector and the anode current collector were extended to the outside of the sealed battery to be utilized as a cathode terminal and an anode terminal.

### Example 2: (Li₂S-LiI-CNF composite) + γ-S-CNFs + solid electrolyte + binder (60:10:29:1)

A cathode and an all solid secondary battery were prepared in substantially the same manner as in Example 1, except that, in preparing the cathode mixture, the mixing weight ratio of the Li₂S-LiI-CNF composite, γ-S-CNFs, the solid electrolyte, and the binder was changed to about 60:10:29:1.0.

### Example 3: (Li₂S-LiI-CNF composite) + γ-S-CNFs + solid electrolyte + binder (60:5:34:1)

A cathode and an all solid secondary battery were prepared in substantially the same manner as in Example 1, except that, in preparing the cathode mixture, the mixing weight ratio of the Li₂S-LiI-CNF composite, γ-S-CNFs, the solid electrolyte, and the binder was changed to about 60:5:34:1.

### Example 4: (Li₂S-LiI-CNF composite) + γ-S-CNFs + solid electrolyte + binder (60:30:9:1)

### Preparation of cathode

The Li₂S-LiI-CNF composite prepared in Preparation Example 2 was prepared as a cathode active material. Li₆PS₅Cl (D50=about 3.0 µm, crystalline), which was an argyrodite-type or kind (e.g., argyrodite) crystal, was prepared as a solid electrolyte. PTFE was prepared as a binder, and γ-S-CNFs obtained according to Preparation Example 3 was utilized in preparing a cathode mixture. These materials were physically mixed in a mortar at a weight ratio of cathode active material:γ-S-CNFs:solid electrolyte:binder = about 60:30:9:1.0 to prepare a cathode mixture. The cathode mixture was obtained by dry mixing utilizing a ball mill.

The cathode mixture was arranged on one side of a cathode current collector including an aluminum foil, of which one side was coated with carbon, and plate-pressed at a pressure of about 200 MPa for about 10 minutes to prepare a cathode in a sheet form. A thickness of the cathode was about 120 µm, and a loading level of the cathode mixture was about 8 mg/cm². A thickness of the cathode active material layer was about 100 µm, and a thickness of the carbon-coated aluminum foil was about 20 µm. An area of the cathode active material layer was identical to an area of the cathode current collector.

### Comparative Example 1: (Li₂S-LiI-CNF composite) + solid electrolyte + binder (60:39:1)

A cathode and an all solid secondary battery were prepared in substantially the same manner as in Example 1, except that, in preparing the cathode mixture, γ-S-CNFs was not utilized, and the mixing weight ratio of the Li₂S-LiI-CNF composite, the solid electrolyte, and the binder was changed to about 60:39:1.

### Comparative Example 2: (Li₂S-LiI-CNF composite) + γ-S-CNFs + solid electrolyte + binder (60:20:19:1): prepared by milling

A cathode and an all solid secondary battery were prepared in substantially the same manner as in Example 1, except that the cathode was prepared according to the following process.

The Li₂S-LiI-CNF composite prepared in Preparation Example 2 was prepared as a cathode active material. Li₆PS₅Cl (D50=3.0 µm, crystalline), which was an argyrodite-type or kind (e.g., argyrodite) crystal, was prepared as a solid electrolyte. PTFE was prepared as a binder, and the γ-S-CNF composite obtained according to Preparation Example 3 was utilized in preparing a cathode mixture. These materials were physically mixed in a mortar at a weight ratio of cathode active material:γ-S-CNFs:solid electrolyte:binder = about 60:20:19:1 to prepare a cathode mixture. The cathode mixture was obtained by dry mixing utilizing a ball mill.

When the γ-S-CNF composite was prepared according to Comparative Example 2, the γ-S-CNF composite became unstable due to heat generated during milling.

### Comparative Example 3: (Li₂S-LiI-CNF composite) + (γ-S) + CNF + solid electrolyte + binder (60:10:29:1): prepared by milling

A cathode and a lithium sulfur battery were prepared in substantially the same manner as in Example 1, except that the cathode was prepared according to the following process.

The Li₂S-LiI-CNF composite prepared in Preparation Example 2, gamma sulfur, and CNF as cathode active materials, Li₆PS₅Cl (D50 = about 3.0 µm, crystalline), which was an argyrodite-type or kind (e.g., argyrodite) crystal, as a solid electrolyte, and PTFE as a binder were physically mixed in a mortar at a weight ratio of about 60:10:29:1 to prepare a cathode mixture. The cathode mixture was obtained by dry mixing utilizing a ball mill.

### Reference Example 1: (Li₂S-LiI-CNF composite) + CNF + solid electrolyte + binder (60:10:29:1)

A cathode and an all solid secondary battery were prepared in substantially the same manner as in Example 1, except that carbon nanofibers (CNFs) were utilized instead of γ-S-CNFs in preparing the cathode mixture.

### Evaluation Example 1: XRD analysis and SEM analysis

For bare Li₂S and pulverized Li₂S utilized in Preparation Example 1, the Li₂S-LiI composite prepared in the first stage of Preparation Example 2, and the Li₂S-LiI-CNF composite prepared in Preparation Example 2, XRD spectra were measured by utilizing Cu Kα radiation. The measurement results are shown in Table 1 and FIG. 1. Sizes of Li₂S crystallites and lattice constants were derived from first peaks appearing at a diffraction angle (2θ) of about 27° ± 2.0° corresponding to a crystal plane (111) in the XRD spectra.

The pulverized Li₂S was prepared by milling under the same conditions as in the first stage of Example 1, except that the mixture including Li₂S and LiI at a weight ratio of about 30:20 was changed to about 50 parts by weight of Li₂S. The second stage was not performed.

For the bare Li₂S, the pulverized Li₂S, the Li₂S-LiI composite prepared in the first stage, and the Li₂S-LiI-CNF composite, particle sizes (i.e., D50 particle diameters) of the composites were measured by utilizing a particle size analyzer (PSA) utilizing laser and a scanning electron microscope, and sizes of Li₂S particles in the composites were measured by utilizing a scanning electron microscope. The measurement results are shown in Table 1 and FIGS. 2A and 2B.

**Table 1**

| Item | Second peak position [°] | Size of Li₂S crystallites [nm] | Size of Li₂S particles [µm] |
|---|---|---|---|
| Bare Li₂S | 27.0211 | 65 | 8 |

| | First peak position [°] | Size of Li₂S crystallites [nm] | Size of Li₂S particles [µm] |
|---|---|---|---|
| Pulverized Li₂S | 26.9270 | 15 | - |
| Li₂S-LiI composite (first stage) | 26.6074 | 8.8 | Less than 1 |
| Preparation Example 2 (Li₂S-LiI-CNF composite) | 26.7020 | 9.9 | Less than 1 |

As shown in Table 1, the first peak position with respect to the crystal plane (111) appearing at the diffraction angle (2θ) of 27° ± 2.0° of the Li₂S-LiI-CNF composite of Preparation Example 2 was moved to a low angle compared to the second peak position with respect to the crystal plane (111) appearing at the diffraction angle (2θ) of 27° ± 2.0° of the bare Li₂S. A first diffraction angle of the first peak of the Li₂S-LiI-CNF composite of Example 1 was smaller than a second diffraction angle of the second peak of the bare Li₂S. Therefore, the crystallite size of the Li₂S-LiI-CNF composite of Example 1 was significantly reduced compared to that of the bare Li₂S.

As shown in Table 1, the first peak positions of the Li₂S-LiI-CNF composite and the Li₂S-LiI composite were moved to a low angle compared to the first peak position of the pulverized Li₂S. Although not shown in Table 1, the first peak of the Li₂S-LiI-CNF composite had a first full width at half maximum (FWHM1), and the second peak of the bare Li₂S had a second full width at half maximum (FWHM2), wherein the size of the first full width at half maximum was greater than the size of the second full width at half maximum. The first full width at half maximum (FWHM1) was about 1° or more.

As shown in Table 1, the particle size and crystallite size of the Li₂S-LiI composite were significantly reduced compared to those of Li₂S. Although not shown in Table 1, a lattice constant of the Li₂S-LiI composite was greater than that of the bare Li₂S. It was determined that the increased lattice constant of the Li₂S-LiI composite compared to the lattice constant of the bare Li₂S was caused by LiI dissolved in the Li₂S crystals. Therefore, it was confirmed that the Li₂S-LiI composite formed a solid solution.

Although not shown in Table 1, a particle size of the composite of Example 1 was about 5 µm.

### Evaluation Example 2: Charge/discharge test

The charge/discharge characteristics of the all solid secondary batteries prepared in Examples 1 to 4 and Comparative Examples 1 and 2 were evaluated by the following charge/discharge test.

The charge/discharge test was performed by placing the all solid secondary batteries in a thermostatic bath at about 45 °C.

A first cycle was performed by charging each of the all solid secondary batteries at a constant current of about 0.1 C for about 12.5 hours until a battery voltage reached about 2.5 V to about 2.8 V. Subsequently, each of the all solid secondary batteries was discharged at a constant current of about 0.1 C for about 12.5 hours until the battery voltage reached about 0.3 V.

A discharge capacity of the first cycle was utilized as a standard capacity. The standard capacity is represented by specific capacity of Li₂S in Table 2.

From a second cycle, charging and discharging were performed up to 150 cycles under the same conditions as those of the first cycle. The measurement results are shown in Table 2. Initial efficiency is represented by Equation 1. Initial efficiency [%] = [discharge capacity in first cycle/charge capacity in first cycle] × 100

The number of cycles refers to the number of cycles required to reduce a discharge capacity to about 80 % of the standard capacity after the second cycle. It was considered that, as the number of cycles increased, lifespan characteristics were improved.

**Table 2**

| Item | Cathode | Energy density (mAh/g) | Initial efficiency [%] | Number of cycles (times) |
|---|---|---|---|---|
| Example 1 | (Li₂S-LiI-CNF composite) + γ-S-CNFs + solid electrolyte + binder (60:20:19:1) | 890 | 85 | 320 |
| Example 2 | (Li₂S-LiI-CNF composite) + γ-S-CNFs + solid electrolyte + binder (60:10:29:1) | 930 | 87 | 400 |
| Example 3 | (Li₂S-LiI-CNF composite) + γ-S-CNFs + solid electrolyte + binder (60:5:34:1) | 935 | 88.5 | 380 |
| Example 4 | (Li₂S-LiI-CNF composite) + γ-S-CNFs + solid electrolyte + binder (60:30:9:1) | 800 | 85 | 280 |
| Reference Example 1 | (Li₂S-LiI-CNF composite) + CNF + solid electrolyte + binder (60:10:29:1) | 900 | 87 | 210 |
| Comparativ e Example 1 | (Li₂S-LiI-CNF composite) + solid electrolyte + binder (60:39:1) | 950 | 89 | 250 |
| Comparativ e Example 2 | (Li₂S-LiI-CNF composite) + γ-S-CNFs + solid electrolyte + binder (60:10:29:1): prepared by milling | 350 | 65 | 80 |
| Comparativ e Example 3 | (Li₂S-LiI-CNF composite) + (γ-S) + CNF + solid electrolyte + binder (60:10:29:1): prepared by milling | 200 | 55 | 30 |

As shown in Table 2, the all solid secondary batteries of Examples 1 to 4 showed improved lifespan characteristics compared to the all solid secondary batteries of Reference Example 1 and Comparative Examples 1 to 3. Among the all solid secondary batteries of Examples 1 to 4, the all solid secondary battery prepared according to Example 2 showed the best lifespan characteristics due to formation of a γ-S-CNFs macro electron/ion network. The all solid secondary battery of Example 2 showed slightly reduced initial efficiency and capacity characteristics compared to the all solid secondary battery of Comparative Example 1, due to initial loss of γ-S-CNFs.

In the all solid secondary battery of Comparative Example 1, although initial efficiency was excellent or suitable, lifespan characteristics were reduced compared to the all solid secondary batteries of Examples 1 to 4.

The γ-S-CNF composite of Comparative Example 2 was prepared by milling, and thus the γ-S-CNF composite became unstable due to heat generated during the milling compared to the γ-S-CNF composite of Example 2. As a result, the energy density, initial efficiency, and lifespan characteristics of the all solid secondary battery of Comparative Example 2 deteriorated.

In Comparative Example 3, a simple blend of gamma sulfur and CNF was utilized and prepared by milling, and the performance of a solid electrolyte deteriorated due to the milling, thereby reducing the initial efficiency and lifespan characteristics of the all the all solid secondary battery of Comparative Example 3.

### Evaluation Example 3: High rate characteristics (rate performance)

The high rate characteristics of the all solid secondary batteries prepared in Examples 1 to 4, Reference Example 1, and Comparative Examples 1 to 3 were evaluated by the following charge/discharge test. The charge/discharge test was performed by placing the all solid secondary batteries in a thermostatic bath at about 45 °C.

Each of the all solid secondary batteries was charged with a constant current of about 0.1 C rate at about 45 °C until a voltage reached about 2.5 V (vs. Li) and was then cut-off at a current of about 0.05 C rate while maintaining the voltage at about 2.5 V in a constant voltage mode. Subsequently, each of the all solid secondary batteries was discharged at a constant current of about 0.05 C rate until the voltage reached about 0.3 V (vs. Li) (formation cycle).

Each of the all solid secondary batteries was charged with a constant current of about 0.1 C rate at about 45 °C until a voltage reached about 2.5 V (vs. Li) and was then cut-off at a current of about 0.05 C rate while maintaining the voltage at about 2.5 V in a constant voltage mode. Subsequently, each of the all solid secondary batteries was discharged at a constant current of about 0.1 C rate until the voltage reached about 0.3 V (vs. Li) (first cycle).

Each of the all solid secondary batteries having undergone the formation cycle was charged at a constant current rate of about 0.2 C at about 45 °C until the voltage reached about 2.5 V (vs. Li). Subsequently, each of the all solid secondary batteries was discharged at a constant current of about 0.2 C rate until the voltage reached about 0.3 V (vs. Li) (second cycle).

Each of the all solid secondary batteries having undergone the first cycle was charged at a constant current rate of about 0.2 C at about 45 °C until the voltage reached about 2.5 V (vs. Li). Subsequently, each of the all solid secondary batteries was discharged at a constant current of about 0.33 C rate until the voltage reached about 0.3 V (vs. Li) (second cycle).

Each of the all solid secondary batteries having undergone the second cycle was charged at a constant current rate of about 0.2 C at about 45 °C until the voltage reached about 2.5 V (vs. Li). Subsequently, each of the all solid secondary batteries was discharged at a constant current of about 0.5 C rate until the voltage reached about 0.3 V (vs. Li) (third cycle).

Each of the all solid secondary batteries having undergone the third cycle was charged at a constant current rate of about 0.2 C at about 45 °C until the voltage reached about 2.5 V (vs. Li). Subsequently, each of the all solid secondary batteries was discharged at a constant current of about 1.0 C rate until the voltage reached about 0.3 V (vs. Li) (fourth cycle).

In all charge/discharge cycles, an about 10-minute stop time was provided after every one charge/discharge cycle. Some of the results of the charge/discharge test at room temperature are shown in Table 3. High rate characteristics are defined by Equation 2. High rate characteristics [%] = [discharge capacity in fourth cycle/discharge capacity in first cycle] × 100

**Table 3**

| Item | Cathode | High rate characteristics (1C/0.1C) [%] |
|---|---|---|
| Example 1 | (Li₂S-LiI-CNF composite) + γ-S-CNFs + solid electrolyte + binder (60:20:19:1) | 83 |
| Example 2 | (Li₂S-LiI-CNF composite) + γ-S-CNFs + solid electrolyte + binder (60:10:29:1) | 87 |
| Example 3 | (Li₂S-LiI-CNF composite) + γ-S-CNFs + solid electrolyte + binder (60:5:34:1) | 85 |
| Example 4 | (Li₂S-LiI-CNF composite) + γ-S-CNFs + solid electrolyte + binder (60:30:9:1) | 80 |
| Reference Example 1 | (Li₂S-LiI-CNF composite) + CNF + solid electrolyte + binder (60:10:29:1) | 75 |
| Comparative Example 1 | (Li₂S-LiI-CNF composite) + solid electrolyte + binder (60:39:1) | 71 |
| Comparative Example 2 | (Li₂S-LiI-CNF composite) + γ-S-CNFs + solid electrolyte + binder (60:10:29:1)prepared by milling | 55 |
| Comparative Example 3 | (Li₂S-LiI-CNF composite) + (γ-S) + CNF + solid electrolyte + binder (60:10:29:1): prepared by milling | 45 |

As shown in Table 3, the all solid secondary batteries of Examples 1 to 4 had improved high rate characteristics compared to the all solid secondary batteries of Comparative Examples 1 to 3 and Reference Example 1.

According to one or more embodiments, due to improvement of an ion/electron network in an electrode, rate characteristics may be improved, and cathode overvoltage may be reduced, thereby providing an all solid secondary battery having an improved capacity retention ratio and improved charge/discharge characteristics.

In present disclosure, "not include a or any 'component'", "exclude a or any 'component'", "'component'-free", and/or the like refers to that the "component" not being added, selected or utilized as a component in the composition, structure, or compound, but the "component" of less than a suitable amount may still be included due to other impurities and/or external factors.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

## Claims

1. A cathode (10) comprising:
a cathode current collector (11); and
a cathode active material layer (12) on a side of the cathode current collector (11) and comprising a cathode active material, a gamma sulfur-fibrous carbon-based material composite, and a sulfide-based solid electrolyte,
wherein the cathode active material comprises Li₂S, a Li₂S composite, or a combination thereof, and
the gamma sulfur-fibrous carbon-based material composite has a structure in which monoclinic gamma phase sulfur (S) is on a fibrous carbon-based material.

2. The cathode (10) as claimed in claim 1, wherein an amount of the gamma sulfur-fibrous carbon-based material composite is in a range of 1 part by weight to 30 parts by weight, based on 100 parts by weight of a total weight of the cathode active material layer (12).

3. The cathode (10) as claimed in claims 1 or 2, wherein a fibrous carbon-based material in the gamma sulfur-fibrous carbon-based material composite has an aspect ratio of 2 or more,
the fibrous carbon-based material has a length of 1 µm to 50 µm and a diameter of 10 nm to 10 µm, and
the fibrous carbon-based material comprises carbon nanofibers, carbon nanotubes, or a combination thereof.

4. The cathode (10) as claimed in any of claims 1 to 3, wherein the gamma sulfur-fibrous carbon-based material composite has a Brunauer-Emmett-Teller (BET) specific surface area of 10 m²/g or less, has a cross-section of the fibrous carbon-based material in a circular shape or a polygonal shape, and is further doped with at least one selected from among nitrogen (N) and fluorine (F).

5. The cathode (10) as claimed in any of claims 1 to 4, wherein, in an X-ray diffraction (XRD) spectrum for the gamma sulfur-fibrous carbon-based material composite,
a first peak appears at a diffraction angle (2θ) of 11° ± 2.0° corresponding to a crystal plane (111),
a second peak appears at a diffraction angle (2θ) of 18° to 32° corresponding to a crystal plane (122), and
a third peak appears at a diffraction angle of (2θ) of 27° to 28° corresponding to a crystal plane (222).

6. The cathode (10) as claimed in any of claims 1 to 5, wherein
- the Li₂S composite comprises
a composite of Li₂S and a carbon-based material,
a composite of Li₂S, a carbon-based material, and a solid electrolyte,
a composite of Li₂S and a solid electrolyte,
a composite of Li₂S and a lithium salt,
a composite of Li₂S and a metal carbide,
a composite of Li₂S, a carbon-based material, and a metal carbide,
a composite of Li₂S and a metal nitride,
a composite of Li₂S, a carbon-based material, and a metal nitride, or
a combination thereof; or
- the Li₂S composite comprises a composite of Li₂S and a lithium salt,
wherein the composite of Li₂S and a lithium salt is represented by Li₂S-LiₐX_{b} (wherein 1≤a≤5 and 1≤b≤5), and
wherein X is I, Br, Cl, F, H, O, Se, Te, N, P, As, Sb, Al, B, OCI, PF₆, BF₄, SbF₆, AsF₆, ClO₄, AlO₂, AlCl₄, NO₃, COs, BH₄, SO₄, BO₃, PO₄, NCl, NCl₂, BN₂, or a combination thereof; wherein
preferably the lithium salt is a binary compound or a ternary compound,
the binary compound comprising Lil, LiBr, LiCI, LiF, LiH, Li₂O, Li₂Se, Li₂Te, Li₃N, LisP, Li₃As, Li₃Sb, Li₃Al₂, LiBs, or a combination thereof,
the ternary compound comprising LisOCI, LiPF₆, LiBF₄, LiSbF₆, LiAsF₆, LiClO₄, LiAlO₂, LiAlCl₄, LiNOs, Li₂CO₃, LiBH₄, Li₂SO₄, LisBOs, Li₃PO₄, Li₄NCl, Li₅NCl₂, Li₃BN₂, or a combination thereof..

7. The cathode (10) as claimed in any of claims 1 to 6, wherein the Li₂S composite comprises a carbon-based material which comprises graphene, graphene oxide, reduced graphene oxide, carbon nanofibers, carbon nanotubes, carbon nanobelts, carbon nanorods, or a combination thereof.

8. The cathode (10) as claimed in any of claims 1 to 7, wherein the Li₂S composite comprises a solid solution of Li₂S and a lithium salt, and
a size of Li₂S crystallites obtained from an XRD spectrum of the composite is 20 nm or less; and/or, wherein the Li₂S composite is a composite of Li₂S, Lil, and a carbon-based material,
a size of Li₂S crystallites obtained from an XRD spectrum of the composite is less than 9.9 nm, and
the composite comprises a solid solution of Li₂S and Lil.

9. The cathode (10) as claimed in any of claims 1 to 8, wherein the gamma sulfur-fibrous carbon-based material composite is a product formed by vapor deposition of gamma sulfur on carbon nanofibers and comprises monoclinic sulfur that is stable at a temperature below 80 °C.

10. A lithium secondary battery comprising:
the cathode (10) as claimed in any of claims 1 to 9;
an anode (20); and
an electrolyte layer (30) between the cathode (10) and the anode (20),
wherein the anode (20) comprises an anode current collector (21) and a first anode active material layer (22) on a side of the anode current collector (21).

11. The lithium secondary battery as claimed in claim 10, wherein the electrolyte layer (30) comprises a liquid electrolyte, a solid electrolyte, a gel electrolyte, or a combination thereof,
the liquid electrolyte comprising a lithium salt and an organic solvent,
the solid electrolyte comprising a sulfide-based solid electrolyte, an oxide-based solid electrolyte, a polymer solid electrolyte, or a combination thereof,
the gel electrolyte comprising a polymer gel electrolyte, wherein preferably the solid electrolyte is a sulfide-based solid electrolyte,
wherein the sulfide-based solid electrolyte comprises at least one selected from among
Li₂S-P₂S₅,
Li₂S-P₂S₅-LiX
(wherein X is a halogen element),
Li₂S-P₂S₅-Li₂O,
Li₂S-P₂S₅-Li₂O-LiI,
Li₂S-SiS₂,
Li₂S-SiS₂-LiI,
Li₂S-SiS₂-LiBr,
Li₂S-SiS₂-LiCl,
Li₂S-SiS₂-B₂S₃-LiI,
Li₂S-SiS₂-P₂S₅-LiI,
Li₂S-B₂S₃,
Li₂S-P₂S₅-ZₘSₙ
(wherein m and n are positive numbers and Z is one of Ge, Zn, and Ga),
Li₂S-GeS₂,
Li₂S-SiS₂-Li₃PO₄,
Li₂S-SiS₂-LiₚMO_{q} (wherein p and q are positive numbers and M is one of P, Si, Ge, B, Al, Ga, and In),
Li₇₋ₓPS₆₋ₓClₓ
(wherein 0≤x≤2),
Li₇₋ₓPS₆₋ₓBrₓ
(wherein 0≤x≤2), and
Li₇₋ₓPS₆₋ₓIₓ
(wherein 0≤x≤2), and
wherein the sulfide-based solid electrolyte comprises an argyrodite-type solid electrolyte, the argyrodite-type solid electrolyte comprising at least one selected from among Li₆PS₅Cl, Li₆PS₅Br, and Li₆PS₅I.

12. The lithium secondary battery as claimed in claim 10 or 11, wherein:
the first anode active material layer (22) is a metal layer, and the metal layer comprises lithium or a lithium alloy; or
the first anode active material layer (22) comprises an anode active material and a binder, the anode active material comprising particles, and an average particle diameter of the particles of the anode active material being 4 µm or less.

13. The lithium secondary battery as claimed in any of claims 10 to 12, wherein the anode active material comprises at least one selected from among a carbon-based anode active material and a metal or metalloid anode active material,
the carbon-based anode active material comprising amorphous carbon, crystalline carbon, porous carbon, or a combination thereof,
the metal or metalloid anode active material comprising gold (Au), platinum (Pt), palladium (Pd), silicon (Si), silver (Ag), aluminum (Al), bismuth (Bi), tin (Sn), zinc (Zn), or a combination thereof.

14. The lithium secondary battery as claimed in any of claims 10 to 13, further comprising a second anode active material layer ((24) between the anode current collector (21) and the first anode active material layer (22) and/or between the anode current collector (21) and the electrolyte layer (30),
wherein the second anode active material layer ((24) is a metal layer, and the metal layer comprises lithium or a lithium alloy.

15. The lithium secondary battery as claimed in any of claims 10 to 14, wherein the anode (20) comprises an anode current collector (21),
at least one of the cathode current collector (11) or the anode current collector (21) comprises a base film and a metal layer on a side of the base film,
wherein the base film comprises a polymer, wherein the polymer comprises polyethylene terephthalate (PET), polyethylene (PE), polypropylene (PP), polybutylene terephthalate (PBT), polyimide (PI), or a combination thereof,
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and/or the lithium secondary battery is all solid secondary battery (1).
